(19) Europäisches Patentamt / European Patent Office / Office européen des brevets

(11) EP 4 498 673 A1

(12) EUROPEAN PATENT APPLICATION
published in accordance with Art. 153(4) EPC

(43) Date of publication:
29.01.2025 Bulletin 2025/05

(51) International Patent Classification (IPC):
H04N 19/117 (2014.01)  H04N 19/136 (2014.01)
H04N 19/159 (2014.01)  H04N 19/86 (2014.01)

(21) Application number: 23774208.5

(22) Date of filing: 18.01.2023

(52) Cooperative Patent Classification (CPC):
H04N 19/117; H04N 19/136; H04N 19/159;
H04N 19/167; H04N 19/86

(86) International application number:
PCT/JP2023/001333

(87) International publication number:
WO 2023/181607 (28.09.2023 Gazette 2023/39)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 22.03.2022 JP 2022046035

(71) Applicant: CANON KABUSHIKI KAISHA
Tokyo 146-8501 (JP)

(72) Inventors:
• OKAWA, Koji
Tokyo 146-8501 (JP)
• SHIMA, Masato
Tokyo 146-8501 (JP)

(74) Representative: TBK
Bavariaring 4-6
80336 München (DE)

(54) **IMAGE ENCODER, IMAGE DECODER, IMAGE ENCODING METHOD AND IMAGE DECODING METHOD**

(57) If at least one of a first block and a second block is a block to which a prediction mode in which prediction pixels of an encoding target block are derived using pixels in an image including the block is applied, strength of deblocking filter processing to be performed for a boundary between the first block and the second block is decided as first strength. If at least one of the first block and the second block is a block to which a prediction mode in which for a partial region of the encoding target block, prediction pixels are derived using pixels in the image including the block, and for another region different from the partial region of the block, prediction pixels are derived using pixels in another image different from the image including the block is applied, the strength is decided as strength based on the first intensity.

FIG. 13

EP 4 498 673 A1

## Description

### TECHNICAL FIELD

The present invention relates to an image encoding technique and an image decoding technique.

### BACKGROUND ART

As an encoding method for compression recording of a moving image, a VVC (Versatile Video Coding) encoding method (to be referred to as VVC hereinafter) is known. In the VVC, to improve the encoding efficiency, a basic block including 128 × 128 pixels at maximum is divided into subblocks which have not only a conventional square shape but also a rectangular shape.

Also, in the VVC, a matrix called a quantization matrix and configured to weight coefficients (to be referred to as orthogonal transform coefficients hereinafter) after orthogonal transformation in accordance with a frequency component is used. Data of a high frequency component whose degradation is unnoticeable to human vision is reduced, thereby increasing the compression efficiency while maintaining image quality. PTL 1 discloses a technique of encoding such a quantization matrix.

Also, in the VVC, adaptive deblocking filter processing is performed for the block boundary of a reconstructed image generated by adding a signal after inverse quantization/inverse transformation processing and a prediction image, thereby suppressing block distortion that is noticeable to human vision and preventing propagation of image quality degradation to the prediction image. PTL 2 discloses a technique concerning the deblocking filter.

In recent years, in JVET (Joint Video Experts Team) obtained by standardizing the VVC, a technique for implementing a compression efficiency more than the VVC has been examined. To improve the encoding efficiency, in addition to conventional intra-prediction and inter-prediction, a new prediction method (to be referred to as mixed intra-inter prediction hereinafter) in which intra-prediction pixels and inter-prediction pixels are mixed in the same subblock has been examined.

### CITATION LIST

### PATENT LITERATURE

PTL 1: Japanese Patent Laid-Open No. 2013-38758
PTL 2: Japanese Patent Laid-Open No. 2014-507863

### SUMMARY OF INVENTION

### TECHNICAL PROBLEM

The deblocking filter in the VVC assumes a conventional prediction method such as intra-prediction or inter-prediction, and cannot cope with mixed intra-inter prediction that is a new prediction method. The present invention provides a technique for enabling deblocking filter processing that copes with mixed intra-inter prediction.

### SOLUTION TO PROBLEM

An aspect of the present invention comprises encoding means for encoding an image by performing prediction processing on a block basis, decision means for deciding strength of deblocking filter processing to be performed for a boundary between a first block in the image and a second block adjacent to the first block in the image, and processing means for performing deblocking filter processing according to the strength decided by the decision means for the boundary, wherein the encoding means uses, as the prediction processing, one of a first prediction mode in which prediction pixels of an encoding target block are derived using pixels in an image including the encoding target block, a second prediction mode in which the prediction pixels of the encoding target block are derived using pixels in another image different from the image including the encoding target block, and a third prediction mode in which for a partial region of the encoding target block, prediction pixels are derived using pixels in the image including the encoding target block, and for another region different from the partial region of the encoding target block, prediction pixels are derived using pixels in another image different from the image including the encoding target block, and if at least one of the first block and the second block is a block to which the first prediction mode is applied, the decision means decides the intensity as a first intensity, and if at least one of the first block and the second block is a block to which the third prediction mode is applied, the decision means decides the intensity as strength based on the first intensity.

ADVANTAGEOUS EFFECTS OF INVENTION

According to the present invention, it is possible to provide a technique for enabling deblocking filter processing that copes with mixed intra-inter prediction.

Other features and advantages of the present invention will be apparent from the following description taken in conjunction with the accompanying drawings. Note that the same reference numerals denote the same or like components throughout the accompanying drawings.

BRIEF DESCRIPTION OF DRAWINGS

The accompanying drawings, which are incorporated in and constitute a part of the specification, illustrate embodiments of the invention and, together with the description, serve to explain principles of the invention.

Fig. 1 is a block diagram showing an example of the functional configuration of an image encoding apparatus;
Fig. 2 is a block diagram showing an example of the functional configuration of an image decoding apparatus;
Fig. 3 is a flowchart of encoding processing by the image encoding apparatus;
Fig. 4 is a flowchart of decoding processing by the image decoding apparatus;
Fig. 5 is a block diagram showing an example of the hardware configuration of a computer apparatus;
Fig. 6A is a view showing an example of the configuration of a bitstream;
Fig. 6B is a view showing an example of the configuration of a bitstream;
Fig. 7A is a view showing an example of a method of dividing a basic block 700 into subblocks;
Fig. 7B is a view showing an example of a method of dividing a basic block 700 into subblocks;
Fig. 7C is a view showing an example of a method of dividing a basic block 700 into subblocks;
Fig. 7D is a view showing an example of a method of dividing a basic block 700 into subblocks;
Fig. 7E is a view showing an example of a method of dividing a basic block 700 into subblocks;
Fig. 7F is a view showing an example of a method of dividing a basic block 700 into subblocks;
Fig. 8A is a view showing an example of a quantization matrix;
Fig. 8B is a view showing an example of a quantization matrix;
Fig. 8C is a view showing an example of a quantization matrix;
Fig. 9 is a view showing the reference order of the values of elements in a quantization matrix;
Fig. 10A is a view showing an example of a one-dimensional array;
Fig. 10B is a view showing an example of a one-dimensional array;
Fig. 10C is a view showing an example of a one-dimensional array;
Fig. 11A is a view showing an example of an encoding table;
Fig. 11B is a view showing an example of an encoding table;
Fig. 12A is a view for explaining mixed intra-inter prediction;
Fig. 12B is a view for explaining mixed intra-inter prediction;
Fig. 12C is a view for explaining mixed intra-inter prediction;
Fig. 12D is a view for explaining mixed intra-inter prediction;
Fig. 12E is a view for explaining mixed intra-inter prediction;
Fig. 12F is a view for explaining mixed intra-inter prediction;
Fig. 12G is a view for explaining mixed intra-inter prediction;
Fig. 12H is a view for explaining mixed intra-inter prediction;
Fig. 13 is a block diagram showing an example of the functional configuration of an image encoding apparatus;
Fig. 14 is a view for explaining a pixel group at the boundary between a subblock P and a subblock Q;
Fig. 15 is a flowchart of encoding processing by the image encoding apparatus;
Fig. 16 is a block diagram showing an example of the functional configuration of an image decoding apparatus; and
Fig. 17 is a flowchart of decoding processing by the image decoding apparatus.

DESCRIPTION OF EMBODIMENTS

Hereinafter, embodiments will be described in detail with reference to the attached drawings. Note, the following embodiments are not intended to limit the scope of the claimed invention. Multiple features are described in the embodiments, but limitation is not made to an invention that requires all such features, and multiple such features may be combined as appropriate. Furthermore, in the attached drawings, the same reference numerals are given to the same or similar configurations, and redundant description thereof is omitted.

[First Embodiment]

An image encoding apparatus according to this embodiment acquires a prediction image by applying an intra-prediction image obtained by intra-prediction to a partial region of an encoding target block included in an image and applying an inter-prediction image obtained by inter-prediction to another region different from the partial region of the block. The image encoding apparatus encodes quantized coefficients obtained by quantizing orthogonal transform coefficients of the difference between the block and the prediction image using a quantization matrix (first encoding).

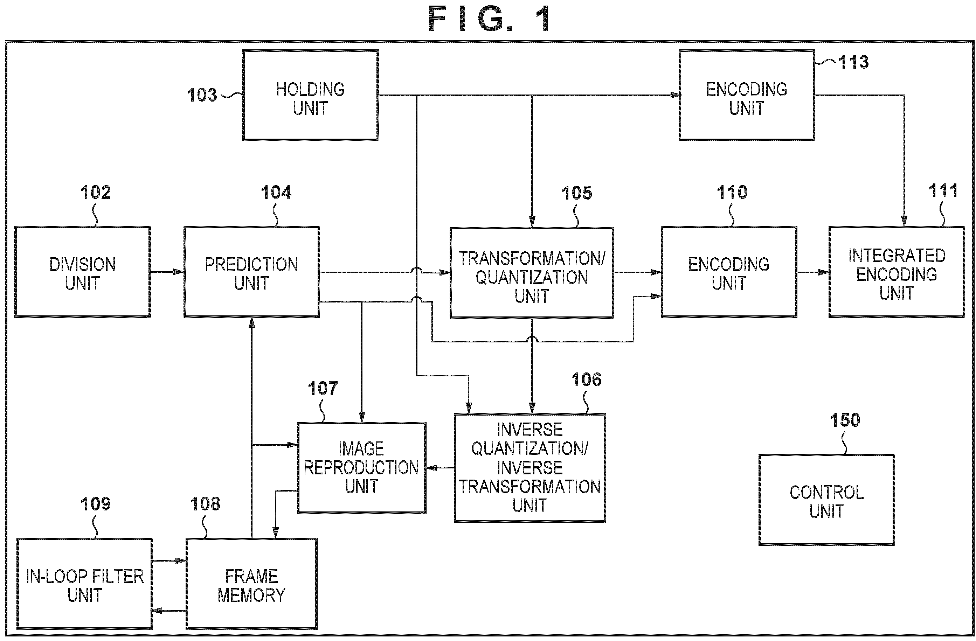

An example of the functional configuration of the image encoding apparatus according to this embodiment will be described first with reference to the block diagram of Fig. 1. A control unit 150 controls the operation of the entire image encoding apparatus. A division unit 102 divides an input image into a plurality of basic blocks and outputs each divided basic block. Note that the input image may be the image of each frame of a moving image (for example, the image of each frame of a moving image at 30 frames/sec) or may be a still image captured periodically or nonperiodically. Also, the division unit 102 can acquire the input image from any apparatus. For example, the input image may be acquired from an image capturing apparatus such as a video camera, may be acquired from an apparatus that holds a plurality of images, or may be acquired from a memory that the self-apparatus can access.

A holding unit 103 holds a quantization matrix corresponding to each of a plurality of prediction processes. In this embodiment, the holding unit 103 holds a quantization matrix corresponding to intra-prediction that is intra-frame prediction, a quantization matrix corresponding to inter-prediction that is interframe prediction, and a quantization matrix corresponding to the above-described mixed intra-inter prediction. Note that each quantization matrix held by the holding unit 103 may be a quantization matrix having default element values or may be a quantization matrix generated by the control unit 150 in accordance with a user operation. Alternatively, each quantization matrix held by the holding unit 103 may be a quantization matrix generated by the control unit 150 in accordance with the characteristic (such as an edge amount or frequency included in the input image) of the input image.

A prediction unit 104 divides the basic block into a plurality of subblocks on a basic block basis. The prediction unit 104 acquires, for each subblock, a prediction image by one of intra-prediction, inter-prediction, and mixed intra-inter prediction and obtains the difference between the subblock and the prediction image as a prediction error. Also, the prediction unit 104 generates, as prediction information, information necessary for prediction such as information representing the basic block division method, a prediction mode indicating prediction for obtaining the prediction image of each subblock, and a motion vector.

A transformation/quantization unit 105 generates the orthogonal transform coefficients of each subblock by performing orthogonal transformation (frequency transformation) for the prediction errors of each subblock obtained by the prediction unit 104, acquires, from the holding unit 103, a quantization matrix corresponding to the prediction (intra-prediction, inter-prediction, or mixed intra-inter prediction) performed by the prediction unit 104 to obtain the prediction image of the subblock, and quantizes the orthogonal transform coefficients using the acquired quantization matrix, thereby generating the quantized coefficients (the quantization result of the orthogonal transform coefficients) of the subblock.

An inverse quantization/inverse transformation unit 106 performs, using the quantization matrix used by the transformation/quantization unit 105 to generate the quantized coefficients, inverse quantization of the quantized coefficients for the quantized coefficients of each subblock generated by the transformation/quantization unit 105, thereby generating the orthogonal transform coefficients, and performs inverse orthogonal transformation of the orthogonal transform coefficients, thereby generating (reproducing) the prediction errors.

An image reproduction unit 107 generates, based on the prediction information generated by the prediction unit 104, a prediction image from the image stored in a frame memory 108, and reproduces the image from the prediction image and the prediction errors generated by the inverse quantization/inverse transformation unit 106. The image reproduction unit 107 then stores the reproduced image in the frame memory 108. The image stored in the frame memory 108 is the image referred to when the prediction unit 104 performs prediction for the image of the current frame or the next frame.

An in-loop filter unit 109 performs in-loop filter processing such as deblocking filter or sample adaptive offset for the image stored in the frame memory 108.

An encoding unit 110 encodes the quantized coefficients generated by the transformation/quantization unit 105 and the prediction information generated by the prediction unit 104, thereby generating encoded data (code data).

An encoding unit 113 encodes the quantization matrix (including at least the quantization matrix used by the transformation/quantization unit 105 for quantization) held by the holding unit 103, thereby generating encoded data (code data).

An integrated encoding unit 111 generates header code data using the encoded data generated by the encoding unit 113, generates a bitstream including the encoded data generated by the encoding unit 110 and the header code data, and outputs the bitstream.

Note that the output destination of the bitstream is not limited to a specific output destination. For example, the bitstream may be output to a memory provided in the image encoding apparatus, may be output to an external apparatus via a network to which the image encoding apparatus is connected, or may be transmitted to the outside for broadcast.

Next, the operation of the image encoding apparatus according to this embodiment will be described. First, encoding of an input image will be described. The division unit 102 divides an input image into a plurality of basic blocks, and outputs each divided basic block.

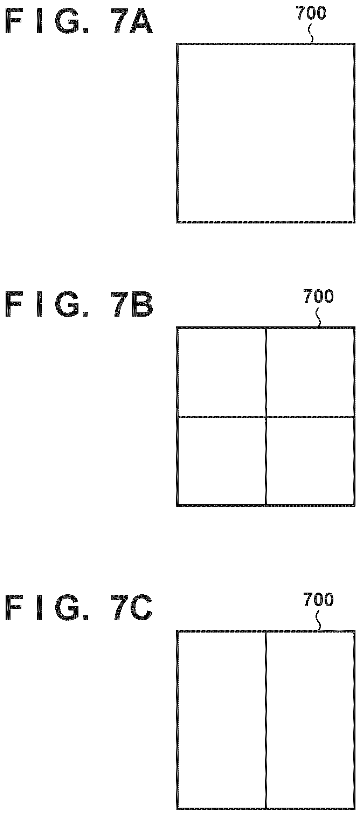

The prediction unit 104 divides the basic block into a plurality of subblocks on a basic block basis. Figs. 7A to 7F show an example of a method of dividing a basic block 700 into subblocks.

Fig. 7A shows the basic block 700 (= subblock) of 8 pixels × 8 pixels, which is not divided into subblocks. Fig. 7B shows an example of conventional square subblock division, and the basic block 700 of 8 pixels × 8 pixels is divided into four subblocks each including 4 pixels × 4 pixels (quadtree division).

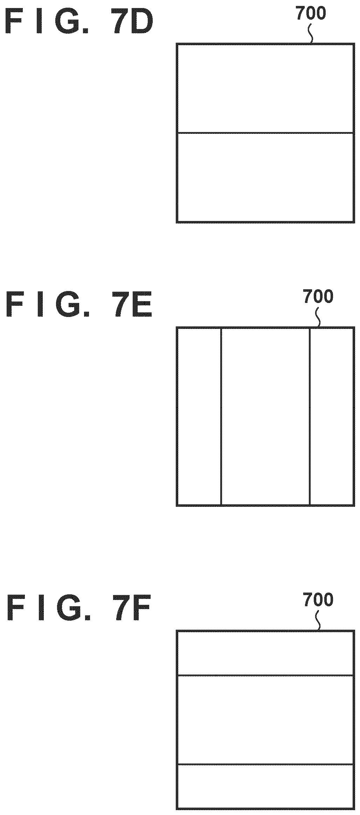

Figs. 7C to 7F show examples of types of rectangular subblock division. In Fig. 7C, the basic block 700 of 8 pixels × 8 pixels is divided into two subblocks each including 4 pixels (horizontal direction) × 8 pixels (vertical direction) (binary tree division). In Fig. 7D, the basic block 700 of 8 pixels × 8 pixels is divided into two subblocks each including 8 pixels (horizontal direction) × 4 pixels (vertical direction) (binary tree division).

In Fig. 7E, the basic block 700 of 8 pixels × 8 pixels is divided into three subblocks including a subblock of 2 pixels (horizontal direction) × 8 pixels (vertical direction), a subblock of 4 pixels (horizontal direction) × 8 pixels (vertical direction), and a subblock of 2 pixels (horizontal direction) × 8 pixels (vertical direction). That is, in Fig. 7E, the basic block 700 is divided into subblocks at a ratio of 1 : 2 : 1 concerning the width (the length in the horizontal direction) (ternary tree division).

In Fig. 7F, the basic block 700 of 8 pixels × 8 pixels is divided into three subblocks including a subblock of 8 pixels (horizontal direction) × 2 pixels (vertical direction), a subblock of 8 pixels (horizontal direction) × 4 pixels (vertical direction), and a subblock of 8 pixels (horizontal direction) × 2 pixels (vertical direction). That is, in Fig. 7F, the basic block 700 is divided into subblocks at a ratio of 1 : 2 : 1 concerning the height (the length in the vertical direction) (ternary tree division).

As described above, in this embodiment, encoding processing is performed using not only square subblocks but also rectangular subblocks. In this embodiment, prediction information including information representing the basic block division method is generated. Note that the division methods shown in Figs. 7A to 7F are merely examples, and the method of dividing the basic block into subblocks is not limited to the division methods shown in Figs. 7A to 7F.

The prediction unit 104 decides prediction (prediction mode) to be performed for each subblock. For each subblock, the prediction unit 104 generates a prediction image based on the prediction mode decided for the subblock and encoded pixels, and obtains the difference between the subblock and the prediction image as prediction errors. In addition, the prediction unit 104 generates, as prediction information, "information necessary for prediction" such as information representing the basic block division method, the prediction mode of each subblock, and a motion vector.

Here, prediction used in this embodiment will be described anew. In this embodiment, three types of predictions (prediction modes) including intra-prediction, inter-prediction, and mixed intra-inter prediction are used.

In intra-prediction (first prediction mode), the prediction pixels of the encoding target block are generated using encoded pixels that are spatially located around the encoding target block (a subblock in this embodiment). In other words, in intra-prediction, the prediction pixels (prediction image) of the encoding target block are generated using encoded pixels in a frame (image) including the encoding target block. For the subblock that has undergone the intra-prediction, information indicating an intra-prediction method such as horizontal prediction, vertical prediction, or DC prediction is generated as "information necessary for prediction".

In inter-prediction (second prediction mode), the prediction pixels of the encoding target block are generated using encoded pixels in another frame (another image) (temporally) different from the frame (image) to which the encoding target block (a subblock in this embodiment) belongs. For the subblock that has undergone the inter-prediction, motion information indicating such as a frame to be referred to or a motion vector is generated as "information necessary for prediction".

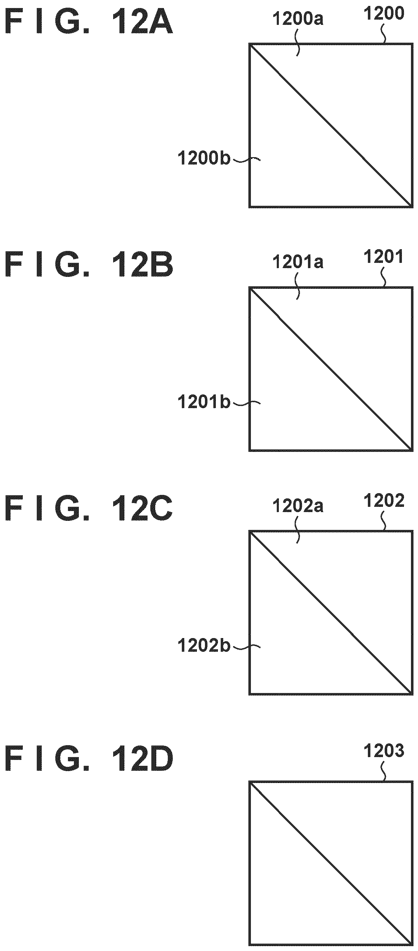

In mixed intra-inter prediction (third prediction mode), first, the encoding target block (a subblock in this embodiment) is divided by a line segment in an oblique direction, thereby dividing the encoding target block into two divided regions. As the prediction pixels of one divided region, "prediction pixels obtained for the one divided region by intra-prediction for the encoding target block" are acquired. Also, as the prediction pixels of the other divided region, "prediction pixels obtained for the other divided region by inter-prediction for the encoding target block" are acquired. That is, the prediction pixels of one divided region of the prediction image obtained by mixed intra-inter prediction for the encoding target block are "prediction pixels obtained for the one divided region by intra-prediction for the encoding target block". In addition, the prediction pixels of the other divided region of the prediction image obtained by mixed intra-inter prediction for the encoding target block are "prediction pixels obtained for the other divided region by inter-prediction for the encoding target block". Figs. 12A to 12H show examples of division of the encoding target block in mixed intra-inter prediction.

Assume that an encoding target block 1200 is divided by a line segment passing through the vertex at the upper left corner and the vertex at the lower right corner of the encoding target block 1200 to divide the encoding target block 1200 into a divided region 1200a and a divided region 1200b, as shown in Fig. 12A. Processing of mixed intra-inter prediction by the prediction unit 104 for the encoding target block 1200 in this case will be described with reference to Figs. 12A to 12D. At this time, the prediction unit 104 performs intra-prediction for the encoding target block 1200, thereby generating an intra-prediction image 1201 (Fig. 12B). Here, the intra-prediction image 1201 includes a region 1201a located at the same position as the divided region 1200a, and a region 1201b located at the same position as the divided region 1200b. The prediction unit 104 obtains, among pixels (intra-prediction pixels) included in the intra-prediction image 1201, intra-prediction pixels belonging to the region 1201a located at the same position as the divided region 1200a as "the prediction pixels of the divided region 1200a". In addition, the prediction unit 104 performs inter-prediction for the encoding target block 1200, thereby generating an inter-prediction image 1202 (Fig. 12C). Here, the inter-prediction image 1202 includes a region 1202a located at the same position as the divided region 1200a, and a region 1202b located at the same position as the divided region 1200b. The prediction unit 104 obtains, among pixels (inter-prediction pixels) included in the inter-prediction image 1202, inter-prediction pixels belonging to the region 1202b located at the same position as the divided region 1200b as "the prediction pixels of the divided region 1200b". The prediction unit 104 then generates a prediction image 1203 (Fig. 12D) formed from the intra-prediction pixels included in the region 1201a, which are "the prediction pixels of the divided region 1200a", and the inter-prediction pixels included in the region 1202b, which are "the prediction pixels of the divided region 1200b".

In the above-described way, the prediction unit 104 generates the intra-prediction image 1201 (Fig. 12B) by intra-prediction for the encoding target block 1200, and further generates the inter-prediction image 1202 (Fig. 12C) by inter-prediction for the encoding target block 1200. Then, the prediction unit 104 arranges, among the intra-prediction pixels in the intra-prediction image 1201, an intra-prediction pixel at the position of coordinates (x, y) included in the region 1201a corresponding to the divided region 1200a at the same coordinates (x, y) of the prediction image 1203. Also, the prediction unit 104 arranges, among the inter-prediction pixels in the inter-prediction image 1202, an inter-prediction pixel at the position of the coordinates (x, y) included in the region 1202b corresponding to the divided region 1200b at the same coordinates (x, y) of the prediction image 1203. The prediction image 1203 shown in Fig. 12D is thus generated.

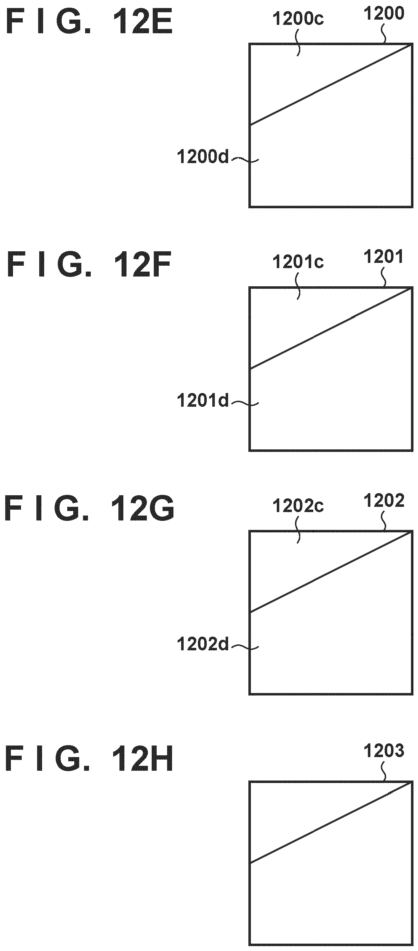

In addition, processing of mixed intra-inter prediction by the prediction unit 104 for the encoding target block 1200 will further be described here with reference to Figs. 12E to 12H. In this example, assume a case where the encoding target block 1200 is divided by a line segment passing through the middle point between the vertex at the upper left corner and the vertex at the lower left corner of the encoding target block 1200 and the vertex at the upper right corner to divide the encoding target block 1200 into a divided region 1200c and a divided region 1200d, as shown in Fig. 12E. At this time, the prediction unit 104 performs intra-prediction for the encoding target block 1200, thereby generating the intra-prediction image 1201 (Fig. 12F). Here, the intra-prediction image 1201 includes a region 1201c located at the same position as the divided region 1200c, and a region 1201d located at the same position as the divided region 1200d. The prediction unit 104 obtains, among pixels (intra-prediction pixels) included in the intra-prediction image 1201, intra-prediction pixels belonging to the region 1201c located at the same position as the divided region 1200c as "the prediction pixels of the divided region 1200c". In addition, the prediction unit 104 performs inter-prediction for the encoding target block 1200, thereby generating the inter-prediction image 1202 (Fig. 12G). Here, the inter-prediction image 1202 includes a region 1202c located at the same position as the divided region 1200c, and a region 1202d located at the same position as the divided region 1200d. The prediction unit 104 obtains, among pixels (inter-prediction pixels) included in the inter-prediction image 1202, inter-prediction pixels belonging to the region 1202d located at the same position as the divided region 1200d as "the prediction pixels of the divided region 1200d". The prediction unit 104 then generates the prediction image 1203 (Fig. 12H) formed from the intra-prediction pixels included in the region 1201c, which are "the prediction pixels of the divided region 1200c", and the inter-prediction pixels included in the region 1202d, which are "the prediction pixels of the divided region 1200d".

In the above-described way, the prediction unit 104 generates the intra-prediction image 1201 (Fig. 12F) by intra-prediction for the encoding target block 1200, and further generates the inter-prediction image 1202 (Fig. 12G) by inter-prediction for the encoding target block 1200. Then, the prediction unit 104 arranges, among the intra-prediction pixels in the intra-prediction image 1201, an intra-prediction pixel at the position of the coordinates (x, y) included in the region 1201c corresponding to the divided region 1200c at the same coordinates (x, y) of the prediction image 1203. Also, the prediction unit 104 arranges, among the inter-prediction pixels in the inter-prediction image 1202, an inter-prediction pixel at the position of the coordinates (x, y) included in the region 1202d corresponding to the divided region 1200d at the same coordinates (x, y) of the prediction image 1203. The prediction image 1203 shown in Fig. 12D is thus generated.

For the subblock that has undergone the mixed intra-inter prediction, information indicating the intra-prediction method, motion information indicating such as a frame to be referred to or a motion vector, information defining a divided region (for example, information defining the above-described line segment), and the like are generated as "information necessary for prediction".

The prediction unit 104 decides the prediction mode of a subblock of interest by the following processing. The prediction unit 104 generates a difference image between the subblock of interest and a prediction image generated by intra-prediction for the subblock of interest. Also, the prediction unit 104 generates a difference image between the subblock of interest and a prediction image generated by inter-prediction for the subblock of interest. In addition, the prediction unit 104 generates a difference image between the subblock of interest and a prediction image generated by mixed intra-inter prediction for the subblock of interest. Note that a pixel value at a pixel position (x, y) in a difference image C between an image A and an image B is the difference between a pixel value AA at the pixel position (x, y) in the image A and a pixel value BB at the pixel position (x, y) in the image B (such as the absolute value of the difference between AA and BB or the square value of the difference between AA and BB). The prediction unit 104 specifies the prediction image for which the sum of the pixel values of all pixels in the difference image is smallest, and decides prediction performed for the subblock of interest to obtain the prediction image as "the prediction mode of the subblock of interest". Note that the method of deciding the prediction mode of the subblock of interest is not limited to the above-described method.

Then, the prediction unit 104 obtains, for each subblock, the prediction image generated by the prediction mode decided for the subblock as "the prediction image of the subblock", and generates prediction errors from the subblock and the prediction image. Also, the prediction unit 104 generates, for each subblock, prediction information including the prediction mode decided for the subblock and "information necessary for prediction" generated for the subblock.

The transformation/quantization unit 105 performs, for each subblock, orthogonal transformation processing corresponding to the size of the prediction errors for the prediction errors of the subblock, thereby generating orthogonal transform coefficients. The transformation/quantization unit 105 then acquires, for each subblock, a quantization matrix corresponding to the prediction mode of the subblock among the quantization matrices held by the holding unit 103, and quantizes the orthogonal transform coefficients of the subblock using the acquired quantization matrix, thereby generating quantized coefficients.

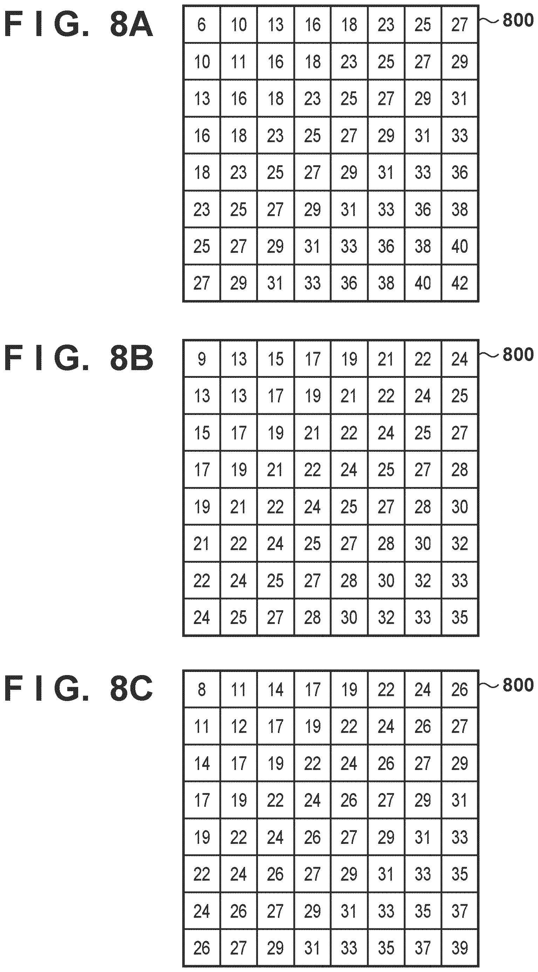

For example, assume that the holding unit 103 holds a quantization matrix having 8 elements × 8 elements (the values of all the 64 elements are quantization step values) exemplified in Fig. 8A as a quantization matrix to be used to quantize the orthogonal transform coefficients of the prediction errors obtained in a case where intra-prediction is performed for the subblock having 8 pixels × 8 pixels. Also, for example, assume that the holding unit 103 holds a quantization matrix having 8 elements × 8 elements (the values of all the 64 elements are quantization step values) exemplified in Fig. 8B as a quantization matrix to be used to quantize the orthogonal transform coefficients of the prediction errors obtained in a case where inter-prediction is performed for the subblock having 8 pixels × 8 pixels. In addition, for example, assume that the holding unit 103 holds a quantization matrix having 8 elements × 8 elements (the values of all the 64 elements are quantization step values) exemplified in Fig. 8C as a quantization matrix to be used to quantize the orthogonal transform coefficients of the prediction errors obtained in a case where mixed intra-inter prediction is performed for the subblock having 8 pixels × 8 pixels.

In this case, the transformation/quantization unit 105 quantizes the orthogonal transform coefficients of "the prediction errors acquired by intra-prediction for the subblock of 8 pixels × 8 pixels" using the quantization matrix for intra-prediction shown in Fig. 8A.

Also, the transformation/quantization unit 105 quantizes the orthogonal transform coefficients of "the prediction errors acquired by inter-prediction for the subblock of 8 pixels × 8 pixels" using the quantization matrix for inter-prediction shown in Fig. 8B.

In addition, the transformation/quantization unit 105 quantizes the orthogonal transform coefficients of "the prediction errors acquired by mixed intra-inter prediction for the subblock of 8 pixels × 8 pixels" using the quantization matrix for mixed intra-inter prediction shown in Fig. 8C.

The inverse quantization/inverse transformation unit 106 performs inverse quantization for the quantized coefficients of each subblock generated by the transformation/quantization unit 105 using the quantization matrix used by the transformation/quantization unit 105 to quantize the subblock, thereby generating orthogonal transform coefficients, and performs inverse orthogonal transformation of the orthogonal transform coefficients, thereby generating (reproducing) the prediction errors.

The image reproduction unit 107 generates the prediction image from the image stored in the frame memory 108 based on the prediction information generated by the prediction unit 104, and reproduces the image of the subblock by adding the prediction image and the prediction errors generated (reproduced) by the inverse quantization/inverse transformation unit 106. The image reproduction unit 107 then stores the reproduced image in the frame memory 108.

The in-loop filter unit 109 performs in-loop filter processing such as deblocking filter or sample adaptive offset for the image stored in the frame memory 108, and stores the image that has undergone the in-loop filter processing in the frame memory 108.

The encoding unit 110 performs, for each subblock, entropy-encoding of the quantized coefficients of the subblock generated by the transformation/quantization unit 105 and the prediction information of the subblock generated by the prediction unit 104, thereby generating encoded data. Note that the method of entropy encoding is not particularly designated, and Golomb coding, arithmetic encoding, Huffman coding, or the like can be used.

Encoding of the quantization matrix will be described next. The quantization matrix held by the holding unit 103 is generated in accordance with the size or prediction mode of the subblock to be encoded. For example, as shown in Figs.

7A to 7F, when employing, as the size of a divided subblock, a size such as 8 pixels × 8 pixels, 4 pixels × 4 pixels, 8 pixels × 4 pixels, 4 pixels × 8 pixels, 8 pixels × 2 pixels, or 2 pixels × 8 pixels, a quantization matrix of the employed size is registered in the holding unit 103. The quantization matrix is prepared for each of intra-prediction, inter-prediction, and mixed intra-inter prediction, and registered in the holding unit 103.

The method of generating the quantization matrix according the size or prediction mode of the subblock is not limited to a specific generation method as described above, and the method of managing the quantization matrix in the holding unit 103 is not limited to a specific management method.

In this embodiment, the quantization matrix held by the holding unit 103 is held in a two-dimensional shape, as shown in Figs. 8A to 8C, but the elements in the quantization matrix are not limited to these. Also, a plurality of quantization matrices can be held in correspondence with the same prediction method depending on the size of the subblock or whether the encoding target is a luminance block or a color difference block. In general, since the quantization matrix implements quantization processing according to the human visual characteristic, as shown in Figs. 8A to 8C, elements for DC components corresponding to the upper left corner portion of the quantization matrix are small, and elements for AC components corresponding to the lower right portion are large.

The encoding unit 113 reads out the quantization matrix (including at least the quantization matrix used by the transformation/quantization unit 105 for quantization) held by the holding unit 103, and encodes the readout quantization matrix. For example, the encoding unit 113 encodes a quantization matrix of interest by the following processing.

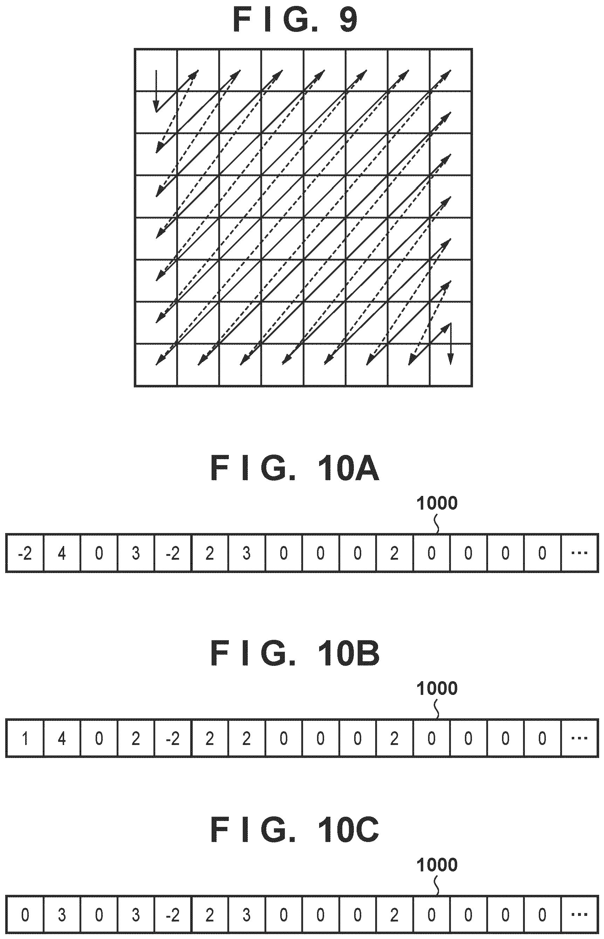

The encoding unit 113 refers to, in a predetermined order, the values of elements in the quantization matrix of interest that is a two-dimensional array, and generates a one-dimensional array in which difference values between the values of currently referred elements and the values of immediately preceding referred elements are arranged. For example, if the quantization matrix shown in Fig. 8C is the quantization matrix of interest, the encoding unit 113 refers to the values of the elements in an order indicated by arrows from the value of the element at the upper left corner of the quantization matrix of interest to the value of the element at the lower right corner, as shown in Fig. 9.

In this case, since the value of the element referred to first is "8", and there does not exist the value of the immediately preceding referred element, the encoding unit 113 outputs, as an output value, a predetermined value or a value obtained by a certain method. For example, the encoding unit 113 may output the value "8" of the currently referred element as the output value, or output a value obtained by subtracting a predetermined value from the value "8" of the element as the output value, and the output value may not be a value decided by a specific method.

Since the value of the element referred to next is "11", and the value of the immediately preceding referred element is "8", the encoding unit 113 outputs, as the output value, a difference value "+3" obtained by subtracting the value "8" of the immediately preceding referred element from the value "11" of the currently referred element. In this way, the encoding unit 113 refers to the values of the elements in the quantization matrix in a predetermined order, obtains and outputs output values, and generates a one-dimensional array in which the output values are arranged in the output order.

Fig. 10A shows a one-dimensional array generated by this processing from the quantization matrix shown in Fig. 8A. Fig. 10B shows a one-dimensional array generated by this processing from the quantization matrix shown in Fig. 8B. Fig. 10C shows a one-dimensional array generated by this processing from the quantization matrix shown in Fig. 8C. In Figs. 10A to 10C, "8" is set as the predetermined value.

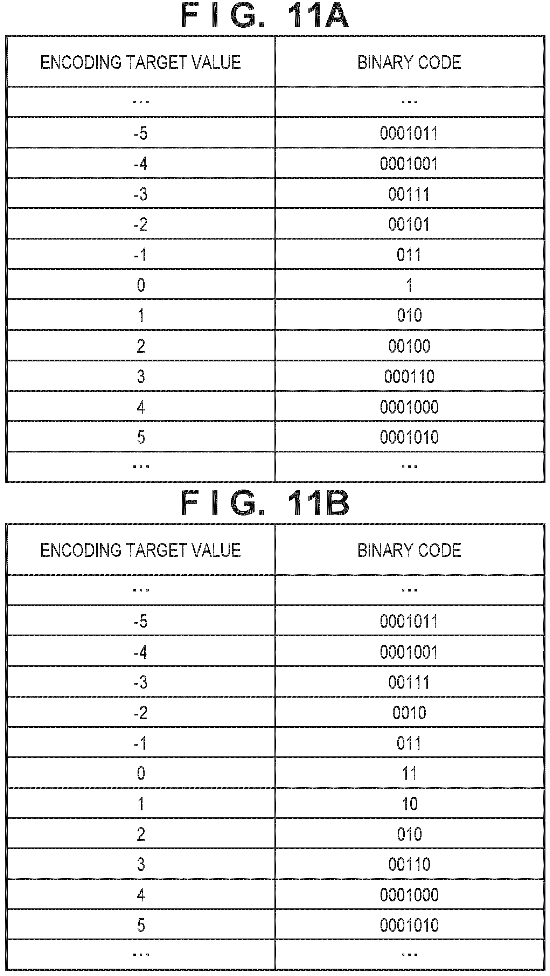

The encoding unit 113 then encodes the one-dimensional array generated for the quantization matrix of interest. For example, the encoding unit 113 refers to an encoding table exemplified in Fig. 11A, and generates, as encoded data, a bit string by replacing each element value in the one-dimensional array with a corresponding binary code. Note that the encoding table is not limited to the encoding table shown in Fig. 11A and, for example, an encoding table exemplified in Fig. 11B may be used.

Referring back to Fig. 1, the integrated encoding unit 111 integrates "header information necessary for image encoding" with the encoded data generated by the encoding unit 113 and generates header code data using the encoded data integrated with the header information. The integrated encoding unit 111 then generates a bitstream by multiplexing the encoded data generated by the encoding unit 110 and the header code data, and outputs the bitstream.

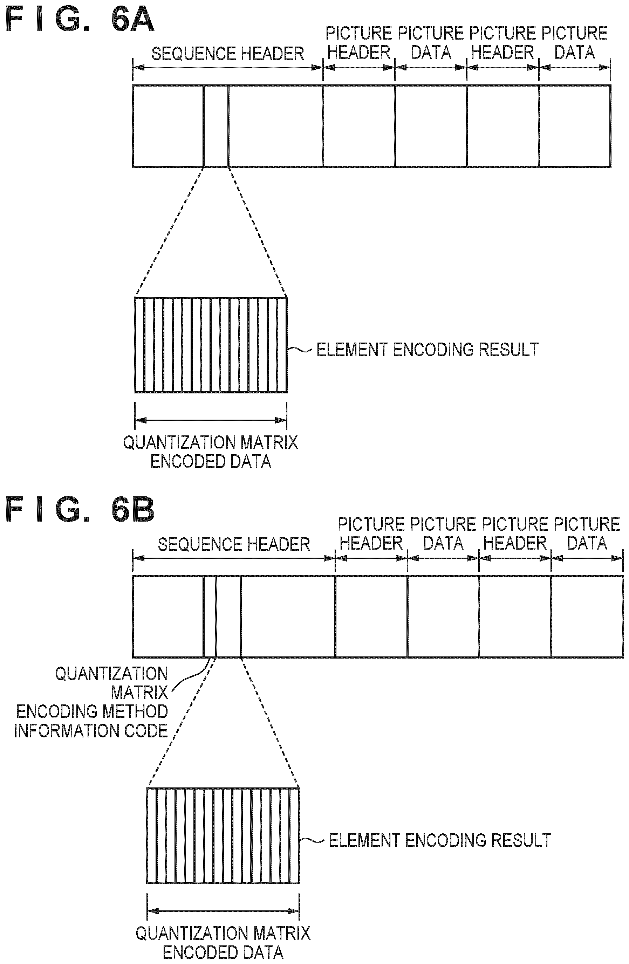

Fig. 6A shows an example of the configuration of the bitstream generated by the integrated encoding unit 111. A sequence header includes the encoded data of the quantization matrix, and includes the encoded data of each element. However, the position to encode these is not limited to this, and these may be encoded to a picture header or another header. When changing the quantization matrix in one sequence, the quantization matrix may be updated by newly encoding this. At this time, all quantization matrices may be rewritten, or a part of a quantization matrix may be changed by designating the prediction mode for the quantization matrix corresponding to the quantization matrix to be rewritten.

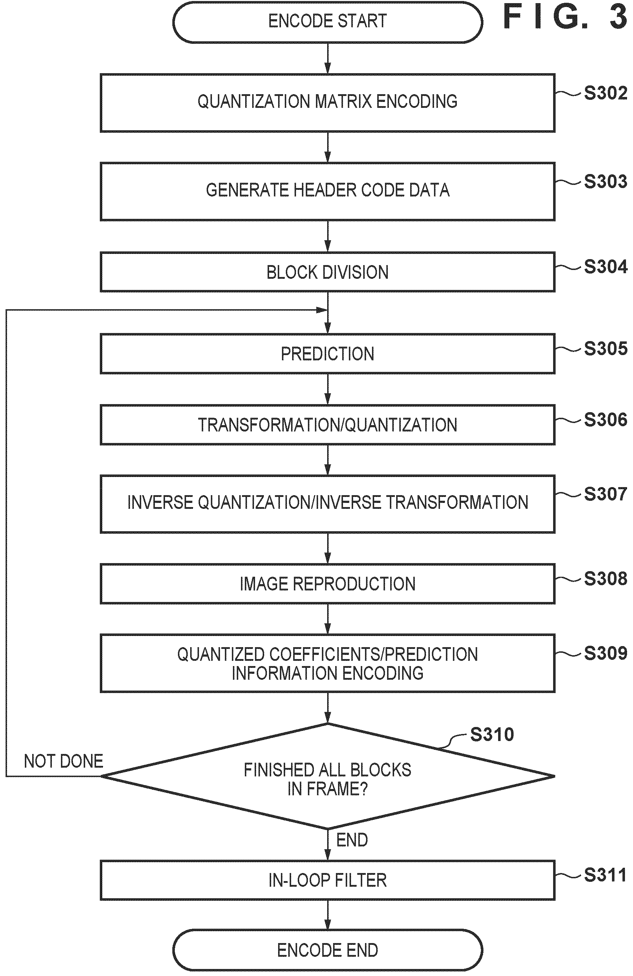

Encoding processing by the above-described image encoding apparatus will be described with reference to the flowchart of Fig. 3. Note that the processing according to the flowchart of Fig. 3 is encoding processing for one input image. Hence, when encoding the image of each frame of a moving image or a plurality of images captured periodically or nonperiodically, the processes of steps S304 to S311 are repetitively performed for each image.

Before the start of the processing according to the flowchart of Fig. 3, the quantization matrix corresponding to intra-prediction, the quantization matrix corresponding to inter-prediction, and the quantization matrix corresponding to mixed intra-inter prediction are already registered in the holding unit 103. Note that all the quantization matrices held by the holding unit 103 are quantization matrices according to the size of a divided subblock, as described above.

In step S302, the encoding unit 113 reads out the quantization matrix (including at least the quantization matrix used by the transformation/quantization unit 105 for quantization) held by the holding unit 103, and encodes the readout quantization matrix, thereby generating encoded data.

In step S303, the integrated encoding unit 111 generates "header information necessary for image encoding". The integrated encoding unit 111 then integrates the "header information necessary for image encoding" with the encoded data generated by the encoding unit 113 in step S302, and generates header code data using the encoded data integrated with the header information.

In step S304, the division unit 102 divides an input image into a plurality of basic blocks, and outputs each divided basic block. The prediction unit 104 divides the basic block into a plurality of subblocks on a basic block basis.

In step S305, the prediction unit 104 selects unselected one subblocks among the subblocks in the input image as a selected subblock, and decides the prediction mode of the selected subblock. The prediction unit 104 performs prediction according to the decided prediction mode for the selected subblock, and acquires the prediction image, the prediction errors, and the prediction information of the selected subblock.

In step S306, the transformation/quantization unit 105 performs, for the prediction errors of the selected subblock acquired in step S305, orthogonal transformation processing corresponding to the size of the prediction errors, thereby generating orthogonal transform coefficients. The transformation/quantization unit 105 then acquires a quantization matrix corresponding to the prediction mode of the selected subblock among the quantization matrices held by the holding unit 103, and quantizes the orthogonal transform coefficients of the subblock using the acquired quantization matrix, thereby acquiring quantized coefficients.

In step S307, the inverse quantization/inverse transformation unit 106 performs inverse quantization for the quantized coefficients of the selected subblock acquired in step S306 using the quantization matrix used by the transformation/quantization unit 105 to quantize the selected subblock, thereby generating orthogonal transform coefficients. The inverse quantization/inverse transformation unit 106 then performs inverse orthogonal transformation of the generated orthogonal transform coefficients, thereby generating (reproducing) the prediction errors.

In step S308, the image reproduction unit 107 generates, based on the prediction information acquired in step S305, a prediction image from the image stored in the frame memory 108, and reproduces the image of the subblock by adding the prediction image and the prediction errors generated in step S307. The image reproduction unit 107 then stores the reproduced image in the frame memory 108.

In step S309, the encoding unit 110 performs entropy-encoding of the quantized coefficients acquired in step S306 and the prediction information acquired in step S305, thereby generating encoded data.

The integrated encoding unit 111 generates a bitstream by multiplexing the header code data generated in step S303 and the encoded data generated by the encoding unit 110 in step S309, and outputs the bitstream.

In step S310, the control unit 150 determines whether all the subblocks of the input image have been selected as selected subblocks. As the result of the determination, if all the subblocks of the input image have been selected as selected subblocks, the process advances to step S311. On the other hand, if at least one subblock that is not selected yet as a selected subblock remains among the subblocks of the input image, the process returns to step S305.

In step S311, the in-loop filter unit 109 performs in-loop filter processing for the image (the image of the selected subblock reproduced in step S308) stored in the frame memory 108. The in-loop filter unit 109 then stores the image that has undergone the in-loop filter processing in the frame memory 108.

With this processing, since the orthogonal transform coefficients of the subblock that has undergone mixed intra-inter prediction can be quantized using the quantization matrix corresponding to the mixed intra-inter prediction, it is possible to control quantization for each frequency component and improve image quality.

<Modifications>

In the first embodiment, quantization matrices are individually prepared for intra-prediction, inter-prediction, and mixed intra-inter prediction, and the quantization matrix corresponding to each prediction is encoded. However, some of these may be shared.

For example, to quantize the orthogonal transform coefficients of the prediction errors obtained based on mixed intra-inter prediction, not the quantization matrix corresponding to the mixed intra-inter prediction but the quantization matrix corresponding to intra-prediction may be used. That is, for example, to quantize the orthogonal transform coefficients of the prediction errors obtained based on mixed intra-inter prediction, not the quantization matrix for mixed intra-inter prediction shown in Fig. 8C but the quantization matrix for intra-prediction shown in Fig. 8A may be used. In this case, encoding of the quantization matrix corresponding to mixed intra-inter prediction can be omitted. This makes it possible to decrease the amount of the encoded data of the quantization matrix included in the bitstream and reduce image quality degradation caused by an error of intra-prediction such as block distortion.

In addition, to quantize the orthogonal transform coefficients of the prediction errors obtained based on mixed intra-inter prediction, not the quantization matrix corresponding to the mixed intra-inter prediction but the quantization matrix corresponding to inter-prediction may be used. That is, for example, to quantize the orthogonal transform coefficients of the prediction errors obtained based on mixed intra-inter prediction, not the quantization matrix for mixed intra-inter prediction shown in Fig. 8C but the quantization matrix for inter-prediction shown in Fig. 8B may be used. In this case, encoding of the quantization matrix corresponding to mixed intra-inter prediction can be omitted. This makes it possible to decrease the amount of the encoded data of the quantization matrix included in the bitstream and reduce image quality degradation caused by an error of inter-prediction such as jerky motion.

Also, according to the sizes of the region of "prediction pixels obtained by intra-prediction" and the region of "prediction pixels obtained by inter-prediction" in the prediction image of the subblock obtained by executing mixed intra-inter prediction, the quantization matrix to be used for the subblock may be decided.

For example, assume that the subblock 1200 is divided into the divided region 1200c and the divided region 1200d, as shown in Fig. 12E. Assume that "prediction pixels obtained by intra-prediction" are obtained as the prediction pixels of the divided region 1200c, and "prediction pixels obtained by inter-prediction" are obtained as the prediction pixels of the divided region 1200d. Also assume that a size (area (number of pixels)) S1 of the divided region 1200c : a size (area (number of pixels)) S2 of the divided region 1200d = 1 : 3.

In this case, the size of the divided region 1200d to which inter-prediction is applied is larger than the size of the divided region 1200c to which intra-prediction is applied in the subblock 1200. Hence, the transformation/quantization unit 105 applies the quantization matrix corresponding to inter-prediction (for example, the quantization matrix shown in Fig. 8B) to quantize the orthogonal transform coefficients of the subblock 1200.

Note that if the size of the divided region 1200d to which inter-prediction is applied is smaller than the size of the divided region 1200c to which intra-prediction is applied in the subblock 1200, the transformation/quantization unit 105 applies the quantization matrix corresponding to intra-prediction (for example, the quantization matrix shown in Fig. 8A) to quantize the orthogonal transform coefficients of the subblock 1200. This makes it possible to omit encoding of the quantization matrix corresponding to mixed intra-inter prediction while reducing image quality degradation of the divided region with a larger size. Hence, the amount of the encoded data of the quantization matrix included in the bitstream can be decreased.

Also, a quantization matrix obtained by combining "the quantization matrix corresponding to intra-prediction" and "the quantization matrix corresponding to the inter-prediction" in accordance with the ratio of S1 and S2 may be generated as the quantization matrix corresponding to mixed intra-inter prediction. For example, the transformation/quantization unit 105 may generate the quantization matrix corresponding to mixed intra-inter prediction using equation (1).

$$QM[x][y] = \{w \times QMinter[x][y] + (1 - w) \times QMintra[x][y]\}) \qquad ...(1)$$

Here, QM[x][y] indicates the value (quantization step value) of the element at the coordinates (x, y) in the quantization matrix corresponding to mixed intra-inter prediction. QMinter[x][y] indicates the value (quantization step value) of the element at the coordinates (x, y) in the quantization matrix corresponding to inter-prediction. QMintra[x][y] indicates the value (quantization step value) of the element at the coordinates (x, y) in the quantization matrix corresponding to intra-prediction. Also, w has a value of not less than 0 and not more than 1, which indicates the ratio of the region where inter-prediction is used in the subblock, and w = S2/(S1 + S2). Since the quantization matrix corresponding to mixed intra-inter prediction can be generated as needed and need not be created in advance, encoding of the quantization matrix can be omitted. Hence, the amount of the encoded data of the quantization matrix included in the bitstream can be decreased. It is also possible to perform appropriate quantization control according to the ratio of the sizes of the regions in which intra-prediction and inter-prediction are used and improve image quality.

Also, in the first embodiment, the quantization matrix to be applied to the subblock to which mixed intra-inter prediction is applied is uniquely decided. However, the quantization matrix may be selected by introducing an identifier.

Various methods are used to select the quantization matrix to be applied to the subblock to which mixed intra-inter prediction is applied from the quantization matrix corresponding to intra-prediction, the quantization matrix corresponding to inter-prediction, and the quantization matrix corresponding to mixed intra-inter prediction. For example, the control unit 150 may select the quantization matrix in accordance with a user operation.

An identifier for specifying the quantization matrix selected as the quantization matrix to be applied to the subblock to which mixed intra-inter prediction is applied is stored in the bitstream.

For example, in Fig. 6B, a quantization matrix encoding method information code is newly introducing as the identifier, thereby selecting the quantization matrix to be applied to the subblock to which mixed intra-inter prediction is applied. For example, if the quantization matrix encoding method information code indicates 0, it indicates that the quantization matrix corresponding to intra-prediction is applied to the subblock to which mixed intra-inter prediction is applied. Also, if the quantization matrix encoding method information code indicates 1, it indicates that the quantization matrix corresponding to inter-prediction is applied to the subblock to which mixed intra-inter prediction is applied. On the other hand, if the quantization matrix encoding method information code indicates 2, it indicates that the quantization matrix corresponding to mixed intra-inter prediction is applied to the subblock to which mixed intra-inter prediction is applied.

This makes it possible to selectively implement a decrease of the amount of the encoded data of the quantization matrix included in the bitstream and unique quantization control for the subblock to which mixed intra-inter prediction is applied.

Also, in the first embodiment, a prediction image including prediction pixels (first prediction pixels) for one divided region obtained by dividing a subblock and prediction pixels (second prediction pixels) for the other divided region is generated. However, the prediction image generation method is not limited to this generation method. For example, to improve the image quality of a region (boundary region) near the boundary between one divided region and the other divided region, third prediction pixels calculated by weighted-averaging the first prediction pixels and the second prediction pixels included in the boundary region may be used as the prediction pixels of the boundary region. In this case, the prediction pixel values in a corresponding region corresponding to the one divided region in the prediction image are the first prediction pixels, and the prediction pixel values in a corresponding region corresponding to the other divided region in the prediction image are the second prediction pixels. The prediction pixel values in a corresponding region corresponding to the above-described boundary region in the prediction image are the third prediction pixels. This can suppress degradation of image quality in the boundary region between the divided regions in which different predictions are used, and improve image quality.

Also, in the first embodiment, three types of predictions including intra-prediction, inter-prediction, and mixed intra-inter prediction have been described as an example, but the types and number of predictions are not limited to this example. For example, combined inter-intra prediction (CIIP) employed in the VVC may be used. Combined inter-intra prediction is prediction that calculates pixels in an entire encoding target block by weighted-averaging prediction pixels by intra-prediction and prediction pixels by inter-prediction. In this case, a quantization matrix used for a subblock using mixed intra-inter prediction can be shared as a quantization matrix used for a subblock using combined inter-intra prediction. This makes it possible to apply, to a subblock for which prediction with a common feature that both the prediction pixels by intra-prediction and the prediction pixels by inter-prediction are used in the same subblock is used, quantization using a quantization matrix having the same quantization control characteristic. Furthermore, the code amount of the quantization matrix corresponding to the new prediction method can be also decreased.

Also, in the first embodiment, the encoding target is an input image. However, the encoding target is not limited to an image. For example, a two-dimensional data array that is feature amount data used in machine learning such as object recognition may be encoded, like an input image, and a bitstream may thus be generated and output. This can efficiently encode the feature amount data used in machine learning.

[Second Embodiment]

An image decoding apparatus according to this embodiment decodes quantized coefficients for a decoding target block from a bitstream, derives transform coefficients from the quantized coefficients using a quantization matrix, and performs inverse frequency transformation of the transform coefficients, thereby deriving prediction errors for the decoding target block. The image decoding apparatus then generates a prediction image by applying an intra-prediction image obtained by intra-prediction for a partial region in the decoding target block and applying an inter-prediction image obtained by inter-prediction for another region different from the partial region in the decoding target block, and decodes the decoding target block using the generated prediction image and the prediction errors.

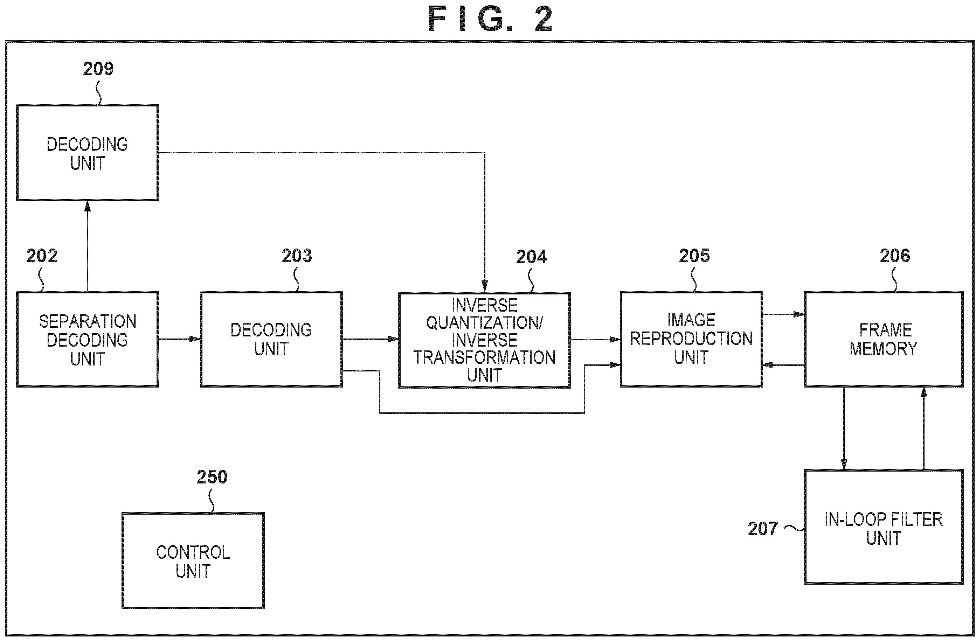

In this embodiment, an image decoding apparatus that decodes a bitstream encoded by the image encoding apparatus according to the first embodiment will be described. An example of the functional configuration of the image decoding apparatus according to this embodiment will be described first with reference to the block diagram of Fig. 2.

A control unit 250 controls the operation of the entire image decoding apparatus. A separation decoding unit 202 acquires a bitstream encoded by the image encoding apparatus according to the first embodiment. The bitstream acquisition form is not limited to a specific acquisition form. For example, the bitstream output from the image encoding apparatus according to the first embodiment may be acquired via a network, or may be acquired from a memory that stores the bitstream one end. The separation decoding unit 202 then separates information about decoding processing or encoded data concerning a coefficient from the acquired bitstream and decodes encoded data existing in the header portion of the bitstream. In this embodiment, the separation decoding unit 202 separates the encoded data of a quantization matrix from the bitstream and supplies the encoded data to a decoding unit 209. Also, the separation decoding unit 202 separates the encoded data of an input image from the bitstream and supplies the encoded data to a decoding unit 203. That is, the separation decoding unit 202 performs an operation reverse to that of the integrated encoding unit 111 shown in Fig. 1.

The decoding unit 209 decodes the encoded data supplied from the separation decoding unit 202, thereby reproducing a quantization matrix. The decoding unit 203 decodes the encoded data supplied from the separation decoding unit 202, thereby reproducing quantized coefficients and prediction information.

An inverse quantization/inverse transformation unit 204 performs the same operation as the inverse quantization/inverse transformation unit 106 provided in the image encoding apparatus according to the first embodiment. The inverse quantization/inverse transformation unit 204 selects a quantization matrix corresponding to prediction corresponding to the quantized coefficients to be decoded among the quantization matrices decoded by the decoding unit 209, and inversely quantizes the quantized coefficients using the selected quantization matrix, thereby reproducing orthogonal transform coefficients. The inverse quantization/inverse transformation unit 204 performs inverse orthogonal transformation for the reproduced orthogonal transform coefficients, thereby reproducing prediction errors.

An image reproduction unit 205 refers to an image stored in a frame memory 206 based on the prediction information decoded by the decoding unit 203, thereby generating a prediction image. The image reproduction unit 205 then generates a reproduced image by adding the prediction errors obtained by the inverse quantization/inverse transformation unit 204 to the generated prediction image, and stores the generated reproduced image in the frame memory 206.

An in-loop filter unit 207 performs in-loop filter processing such as deblocking filter or sample adaptive offset for the reproduced image stored in the frame memory 206. The reproduced image stored in the frame memory 206 is appropriately output by the control unit 250. The output destination of the reproduced image is not limited to a specific output destination. For example, the reproduced image may be displayed on a display screen of a display device such as a display, or the reproduced image may be output to a projection apparatus such as a projector.

The operation (bitstream decoding processing) of the image decoding apparatus having the above-described configuration will be described next. The separation decoding unit 202 acquires a bitstream generated by the image encoding apparatus, separates information about decoding processing or encoded data concerning a coefficient from the bitstream, and decodes encoded data existing in the header of the bitstream. The separation decoding unit 202 extracts the encoded data of a quantization matrix from the sequence header of the bitstream shown in Fig. 6A, and supplies the extracted encoded data to the decoding unit 209. Also, the separation decoding unit 202 supplies the encoded data of each subblock of picture data to the decoding unit 203.

The decoding unit 209 decodes the encoded data of the quantization matrix supplied from the separation decoding unit 202, thereby reproducing a one-dimensional array. More specifically, the decoding unit 209 refers to an encoding table exemplified in Fig. 11A or 11B, and generates a one-dimensional array in which binary codes in the encoded data of the quantization matrix are decoded to difference values, and these are arranged. For example, when the decoding unit 209 decodes the encoded data of the quantization matrices shown in Figs. 8A to 8C, one-dimensional arrays shown in Figs. 10A to 10C are reproduced. In this embodiment, as in the first embodiment, decoding is performed using the encoding table shown in Fig. 11A (or Fig. 11B). The encoding table is not limited to this, and another encoding table may be used as long as that as in the first embodiment is used.

Furthermore, the decoding unit 209 reproduces each element value of the quantization matrix from each difference value of the reproduced one-dimensional array. Processing reverse to the processing performed by the encoding unit 113 to generate a one-dimensional array from a quantization matrix is performed. That is, the value of the element at the start of the one-dimensional array is the element value at the upper left corner of the quantization matrix. A value obtained by adding the value of the element at the start of the one-dimensional array to the value of the second element from the start of the one-dimensional array is the second element value in the above-described "predetermined order". A value obtained by adding the value of the (n-1)th ($2 < n \leq N$ : N is the number of elements of the one-dimensional array) element from the start of the one-dimensional array to the value of the nth element from the start of the one-dimensional array is the nth element value in the above-described "predetermined order". For example, the decoding unit 209 reproduces the quantization matrices shown in Figs. 8A to 8C from the one-dimensional arrays shown in Figs. 10A to 10C, respectively, using the order shown in Fig. 9.

The decoding unit 203 decodes the encoded data of the input image supplied from the separation decoding unit 202, thereby decoding quantized coefficients and prediction information.

The inverse quantization/inverse transformation unit 204 specifies "the prediction mode corresponding to the quantized coefficients to be decoded" included in the prediction information decoded by the decoding unit 203, and selects the quantization matrix corresponding to the specified prediction mode among the quantization matrices reproduced by the decoding unit 209. The inverse quantization/inverse transformation unit 204 then inversely quantizes the quantized coefficients using the selected quantization matrix, thereby reproducing orthogonal transform coefficients. The inverse quantization/inverse transformation unit 204 reproduces the prediction errors by performing inverse orthogonal transformation for the reproduced orthogonal transform coefficients, and supplies the reproduced prediction error to the image reproduction unit 205.

The image reproduction unit 205 refers to an image stored in the frame memory 206 based on the prediction information decoded by the decoding unit 203, thereby generating a prediction image. In this embodiment, three types of predictions including intra-prediction, inter-prediction, and mixed intra-inter prediction are used, like the prediction unit 104 according to the first embodiment. Detailed prediction processing is the same as that of the prediction unit 104 described in the first embodiment, and a description thereof will be omitted. The image reproduction unit 205 then generates a reproduced image by adding the prediction errors obtained by the inverse quantization/inverse transformation unit 204 to the generated prediction image, and stores the generated reproduced image in the frame memory 206. The reproduced image stored in the frame memory 206 is a prediction reference candidate to be referred to when decoding another subblock.

The in-loop filter unit 207 operates like the above-described in-loop filter unit 109 and performs in-loop filter processing such as deblocking filter or sample adaptive offset for the reproduced image stored in the frame memory 206. The reproduced image stored in the frame memory 206 is appropriately output by the control unit 250.

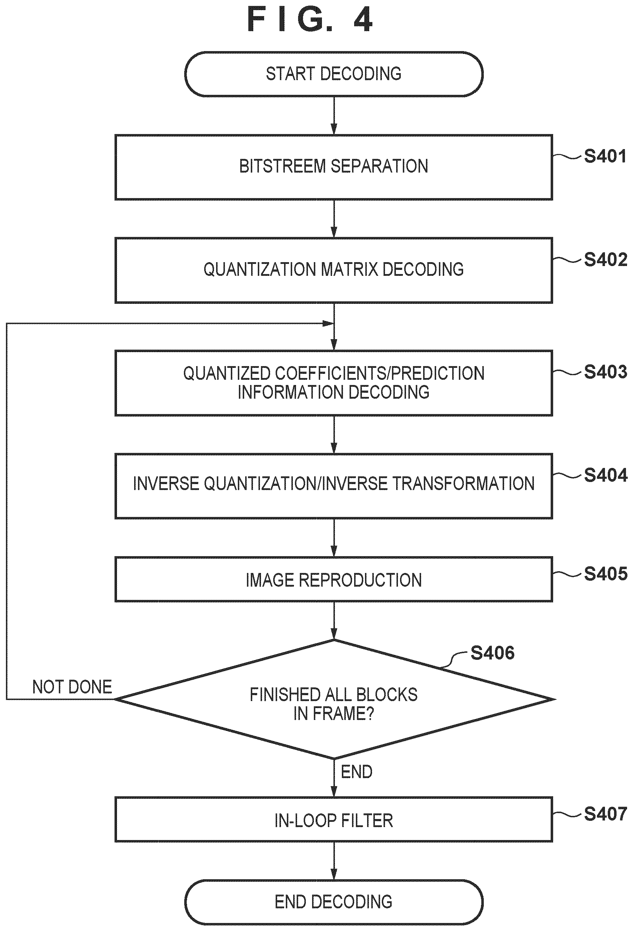

Decoding processing of the image decoding apparatus according to this embodiment will be described with reference to the flowchart of Fig. 4. In step S401, the separation decoding unit 202 acquires an encoded bitstream. The separation decoding unit 202 then separates the encoded data of a quantization matrix from the acquired bitstream and supplies the encoded data to the decoding unit 209. Also, the separation decoding unit 202 separates the encoded data of an input image from the bitstream and supplies the encoded data to the decoding unit 203.

In step S402, the decoding unit 209 decodes the encoded data supplied from the separation decoding unit 202, thereby reproducing the quantization matrix. In step S403, the decoding unit 203 decodes the encoded data supplied from the separation decoding unit 202, thereby reproducing the quantized coefficients of a decoding target subblock and prediction information.

In step S404, the inverse quantization/inverse transformation unit 204 specifies "the prediction mode corresponding to the quantized coefficients of the decoding target subblock" included in the prediction information decoded by the decoding unit 203. The inverse quantization/inverse transformation unit 204 selects the quantization matrix corresponding to the specified prediction mode among the quantization matrices reproduced by the decoding unit 209. For example, if the prediction mode specified for the decoding target subblock is intra-prediction, among the quantization matrices shown in Figs. 8A to 8C, the quantization matrix for intra-prediction shown in Fig. 8A is selected. Also, if the prediction mode specified for the decoding target subblock is inter-prediction, the quantization matrix for inter-prediction shown in Fig. 8B is selected. In addition, if the prediction mode specified for the decoding target subblock is mixed intra-inter prediction, the quantization matrix for mixed intra-inter prediction shown in Fig. 8C is selected. The inverse quantization/inverse transformation unit 204 then inversely quantizes the quantized coefficients of the decoding target subblock using the selected quantization matrix, thereby reproducing orthogonal transform coefficients. The inverse quantization/inverse transformation unit 204 reproduces the prediction errors of the decoding target subblock by performing inverse orthogonal transformation for the reproduced orthogonal transform coefficients, and supplies the reproduced prediction error to the image reproduction unit 205.

In step S405, the image reproduction unit 205 refers to an image stored in a frame memory 206 based on the prediction information decoded by the decoding unit 203, thereby generating the prediction image of the decoding target subblock. The image reproduction unit 205 then generates the reproduced image of the decoding target subblock by adding the prediction errors of the decoding target subblock obtained by the inverse quantization/inverse transformation unit 204 to the generated prediction image, and stores the generated reproduced image in the frame memory 206.

In step S406, the control unit 250 determines whether the processes of steps S403 to S405 are performed for all subblocks. As the result of the determination, if the processes of steps S403 to S405 are performed for all subblocks, the process advances to step S407. On the other hand, if a subblock for which the processes of steps S403 to S405 are not performed still remains, the process returns to step S403 to perform the processes of steps S403 to S405 for the subblock.

In step S407, the in-loop filter unit 207 performs in-loop filter processing such as deblocking filter or sample adaptive offset for the reproduced image generated and stored in the frame memory 206 in step S405.

With this processing, even for a subblock using mixed intra-inter prediction, which is generated in the first embodiment, it is possible to control quantization for each frequency component and decode a bitstream with improved image quality.

<Modifications>

In the second embodiment, quantization matrices are individually prepared for intra-prediction, inter-prediction, and mixed intra-inter prediction, and the quantization matrix corresponding to each prediction is decoded. However, some of these may be shared.

For example, to inversely quantize the quantized coefficients of the orthogonal transform coefficients of the prediction errors obtained based on mixed intra-inter prediction, not the quantization matrix corresponding to the mixed intra-inter prediction but the quantization matrix corresponding to intra-prediction may be decoded and used. That is, for example, to inversely quantize the quantized coefficients of the orthogonal transform coefficients of the prediction errors obtained based on mixed intra-inter prediction, the quantization matrix for intra-prediction shown in Fig. 8A may be used. In this case, decoding of the quantization matrix corresponding to mixed intra-inter prediction can be omitted. That is, it is possible to decode a bitstream in which the amount of the encoded data of the quantization matrix included in the bitstream is decreased and obtain a decoded image in which image quality degradation caused by an error of intra-prediction such as block distortion is reduced.

In addition, to inversely quantize the quantized coefficients of the orthogonal transform coefficients of the prediction errors obtained based on mixed intra-inter prediction, not the quantization matrix corresponding to the mixed intra-inter prediction but the quantization matrix corresponding to inter-prediction may be decoded and used. That is, for example, to inversely quantize the quantized coefficients of the orthogonal transform coefficients of the prediction errors obtained based on mixed intra-inter prediction, the quantization matrix for inter-prediction shown in Fig. 8B may be used. In this case, decoding of the quantization matrix corresponding to mixed intra-inter prediction can be omitted. That is, it is possible to decode a bitstream in which the amount of the encoded data of the quantization matrix included in the bitstream is decreased and obtain a decoded image in which image quality degradation caused by an error of inter-prediction such as jerky motion is reduced.

Also, according to the sizes of the region of "prediction pixels obtained by intra-prediction" and the region of "prediction pixels obtained by inter-prediction" in the prediction image of the subblock for which mixed intra-inter prediction is executed, the quantization matrix to be used for inverse quantization of the subblock may be decided.

For example, assume that a subblock 1200 is divided into a divided region 1200c and a divided region 1200d, as shown in Fig. 12E. Assume that "prediction pixels obtained by intra-prediction" are obtained as the prediction pixels of the divided region 1200c, and "prediction pixels obtained by inter-prediction" are obtained as the prediction pixels of the divided region 1200d. Also assume that a size (area (number of pixels)) $S1$ of the divided region 1200c : a size (area (number of pixels)) $S2$ of the divided region 1200d = 1 : 3.

In this case, the size of the divided region 1200d to which inter-prediction is applied is larger than the size of the divided region 1200c to which intra-prediction is applied in the subblock 1200. Hence, the inverse quantization/inverse transformation unit 204 applies the quantization matrix corresponding to inter-prediction to inversely quantize the quantized coefficients of the subblock 1200.

Note that if the size of the divided region 1200d to which inter-prediction is applied is smaller than the size of the divided region 1200c to which intra-prediction is applied in the subblock 1200, the inverse quantization/inverse transformation unit 204 applies the quantization matrix corresponding to intra-prediction to inversely quantize the quantized coefficients of the subblock 1200.

This makes it possible to omit decoding of the quantization matrix corresponding to mixed intra-inter prediction while reducing image quality degradation of the divided region with a larger size. This makes it possible to decode a bitstream in which the amount of the encoded data of the quantization matrix included in the bitstream is decreased.

Also, a quantization matrix obtained by combining "the quantization matrix corresponding to intra-prediction" and "the quantization matrix corresponding to the inter-prediction" in accordance with the ratio of $S1$ and $S2$ may be generated as the quantization matrix corresponding to mixed intra-inter prediction. For example, the inverse quantization/inverse transformation unit 204 may generate the quantization matrix corresponding to mixed intra-inter prediction using equation (1) described above.

Since the quantization matrix corresponding to mixed intra-inter prediction can be generated as needed, encoding of the quantization matrix can be omitted. This makes it possible to decode a bitstream in which the amount of the encoded data of the quantization matrix included in the bitstream is decreased. It is also possible to perform appropriate quantization control according to the ratio of the sizes of the regions in which intra-prediction and inter-prediction are used and decode a bitstream with improved image quality.

Also, in the second embodiment, the quantization matrix to be applied to the subblock to which mixed intra-inter prediction is applied is uniquely decided. However, the quantization matrix may be selected by introducing an identifier, as in the first embodiment. It is therefore possible to decode a bitstream in which a decrease of the amount of the encoded data of the quantization matrix included in the bitstream and unique quantization control for the subblock to which mixed intra-inter prediction is applied are selectively implemented.

Also, in the second embodiment, a prediction image including prediction pixels (first prediction pixels) for one divided region obtained by dividing a subblock and prediction pixels (second prediction pixels) for the other divided region is decoded. However, the prediction image to be decoded is not limited to the prediction image. For example, as in the modification of the first embodiment, a prediction image in which third prediction pixels calculated by weighted-averaging the first prediction pixels and the second prediction pixels included in a region (boundary region) near the boundary between the one divided region and the other divided region are used as the prediction pixels of the boundary region may be generated. In this case, in the prediction image to be decoded, as in the first embodiment, the prediction pixel values in a corresponding region corresponding to the one divided region in the prediction image are the first prediction pixels, and the prediction pixel values in a corresponding region corresponding to the other divided region in the prediction image are the second prediction pixels. In the prediction image, the prediction pixel values in a corresponding region corresponding to the above-described boundary region in the prediction image are the third prediction pixels. This can suppress degradation of image quality in the boundary region between the divided regions in which different predictions are used, and decode a bitstream with improved image quality.

Also, in the second embodiment, three types of predictions including intra-prediction, inter-prediction, and mixed intra-inter prediction have been described as an example, but the types and number of predictions are not limited to this example. For example, combined inter-intra prediction (CIIP) employed in the VVC may be used. In this case, a quantization matrix used for a subblock using mixed intra-inter prediction can be shared as a quantization matrix used for a subblock using combined inter-intra prediction. This makes it possible to decode a bitstream in which to a subblock for which a prediction method with a common feature that both the prediction pixels by intra-prediction and the prediction pixels by inter-prediction are used in the same subblock is used, quantization using a quantization matrix having the same quantization control characteristic is applied. Furthermore, it is also possible to decode a bitstream in which the code amount of the quantization matrix corresponding to the new prediction method is decreased.

Also, in the second embodiment, an input image that is the encoding target is decoded from a bitstream. However, the decoding target is not limited to an image. For example, a two-dimensional data array may be decoded from a bitstream including encoded data obtained by encoding, like the input image, the two-dimensional array that is feature amount data used in machine learning such as object recognition. This makes it possible to decode a bitstream in which the feature amount data used in machine learning is efficiently encoded.

[Third Embodiment]

An image encoding apparatus according to this embodiment encodes an image by performing prediction processing on a block basis. The image encoding apparatus decides the intensity of deblocking filter processing to be performed for the boundary between a first block in the image and a second block adjacent to the first block in the image, and performs deblocking filter processing according to the decided intensity for the boundary. As the prediction processing, one of a first prediction mode (intra-prediction) in which prediction pixels of an encoding target block are derived using pixels in an image including the encoding target block, a second prediction mode (inter-prediction) in which the prediction pixels of the encoding target block are derived using pixels in another image different from the image including the encoding target block, and a third prediction mode (mixed intra-inter prediction) in which for a partial region of the encoding target block, prediction pixels are derived using pixels in the image including the encoding target block, and for another region different from the partial region of the encoding target block, prediction pixels are derived using pixels in another image different from the image including the encoding target block is used. When deciding the intensity of the deblocking filter, if at least one of the first block and the second block is a block to which the first prediction mode is applied, the image encoding apparatus decides the intensity as a first intensity. Also, if at least one of the first block and the second block is a block to which the third prediction mode is applied, the image encoding apparatus decides the intensity as strength based on the first strength.

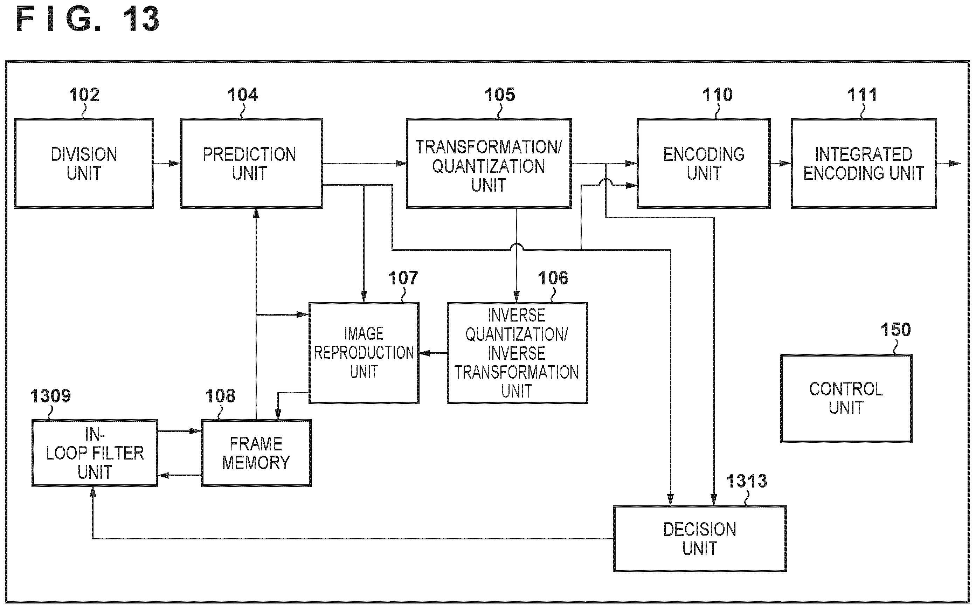

An example of the functional configuration of the image encoding apparatus according to this embodiment will be described with reference to the block diagram of Fig. 13. The same reference numerals as in Fig. 1 denote the same function units in Fig. 13, and a description thereof will be omitted.

Note that a description will be made assuming that a transformation/quantization unit 105 according to this embodiment uses a predetermined quantization matrix when quantizing orthogonal transform coefficients. However, a quantization matrix corresponding to mixed intra-inter prediction may be used as in the above-described embodiment.

An in-loop filter unit 1309 performs in-loop filter processing such as deblocking filter according to filter strength (bS value) decided by a decision unit 1313 for an image (subblock) stored in a frame memory 108. The in-loop filter unit 1309 then stores the image that has undergone the in-loop filter processing in the frame memory 108.

The decision unit 1313 decides the filter strength (bS value) of deblocking filter processing to be performed for the boundary between two adjacent subblocks. More specifically, the decision unit 1313 decides the bS value that is the filter strength of deblocking filter processing to be performed for the boundary between a subblock P and a subblock Q adjacent to the subblock P based on a satisfied one of (Condition 1) to (Condition 6) below.

(Condition 1) If both the subblock P and the subblock Q are subblocks in "a BDPCM mode in which the difference value between adjacent pixels is directly encoded without performing transformation processing for a prediction difference image for which intra-prediction in the horizontal direction or vertical direction is performed", the bS value is decided as 0.

(Condition 2) If at least one of the subblock P and the subblock Q is a subblock that has undergone intra-prediction or mixed intra-inter prediction, the bS value is decided as 2.

(Condition 3) If the boundary between the subblock P and the subblock Q is the boundary between subblocks each serving as a unit of transformation, and orthogonal transform coefficients that is non-zero is included in the orthogonal transform coefficients of at least one subblock, the bS value is decided as 1.

(Condition 4) If the reference image of motion compensation is different between the subblock P and the subblock Q, or the number of motion vectors is different, the bS value is decide as 1.

(Condition 5) If the absolute value of the difference between the motion vector in the subblock P and the motion vector in the subblock Q is not less than 0.5 pixel, the bS value is decided as 1.

(Condition 6) In a case other than (Condition 1) to (Condition 5), the bS value is decided as 0.

Here, for a subblock boundary (edge) where the bS value is 0, deblocking filter processing is not performed. For a subblock boundary (edge) where the bS value is 1 or more, the deblocking filter is decided based on the gradient and activity near the subblock boundary. Basically, the larger the bS value is, the higher the correction strength of deblocking filter processing to be performed is.

Note that in this embodiment, deblocking filter processing is not executed for a subblock boundary where the bS value is 0, and deblocking filter processing is executed for a subblock boundary where the bS value is 1 or more, but the However, the present invention is not limited to this. For example, the number of types of deblocking filter processing strength may be larger or smaller.

The contents of processing according to the strength of deblocking filter processing may change. For example, the bS value may take values in five steps from 0 to 4, like deblocking filter processing of H.264.

Also, in this embodiment, the bS value of deblocking filter processing for the boundary between subblocks using mixed intra-inter prediction is the same as the bS value of deblocking filter processing for the boundary between subblocks using intra-prediction. The bS value is 2, that is, indicates the maximum filter strength, but the present invention is not limited to this. For example, an intermediate bS value is set between bS value = 1 (an example of another bS value) and bS value = 2 in this embodiment, and the intermediate bS value may be used if at least one of the subblock P and the subblock Q is a subblock that has undergone mixed intra-inter prediction. In this case, the same deblocking filter processing as that in a normal case of bS value = 2 can be executed for a luminance component, and deblocking filter processing of correction strength lower than in the case of bS value = 2 can be executed for a color difference component. This makes it possible to execute deblocking filter processing of an intermediate correction strength for the boundary of the subblocks using mixed intra-inter prediction. The bS value may be decided for each pixel of the boundary based on whether each pixel in the subblock using mixed intra-inter prediction is a prediction pixel by intra-prediction or inter-prediction. In this case, the bS value for a prediction pixel by intra-prediction is always 2, and the bS value for a prediction pixel by inter-prediction can be decided based on (Condition 1) to (Condition 6) described above.

Also in this embodiment, the bS value is used as the filter strength, but the present invention is not limited to this. For example, not the bS value but another variable may be defined as the filter strength, or the coefficient or filter length of the deblocking filter may directly be changed.

Deblocking filter processing by the in-loop filter unit 1309 according to this embodiment will be described next in more detail. The deblocking filter processing is performed for the boundary between subblocks each serving as a unit of prediction processing or transformation processing. The filter length of the deblocking filter depends on the size (the number of pixels) of a subblock, and if the size of the subblock is 32 pixels or more, deblocking filter processing can be applied to 7 pixels at maximum from the boundary. Similarly, if the size of the subblock is 4 pixels or less, only the pixel values of one pixel line adjacent to the boundary are updated.

In this embodiment, prediction and transformation processing are performed for all subblocks each having a size of 8 pixels × 8 pixels. However, the present invention is not limited to this, and the size of a subblock to perform prediction and the size of a subblock to perform transformation processing may be different. For example, like Subblock Transform (SBT) in VVC, a subblock to which transformation processing is applied may be obtained by further dividing a subblock to perform prediction processing. Alternatively, the subblock may be larger, like 32 pixels × 32 pixels, or may have a shape other than a square, like 16 pixels × 8 pixels.

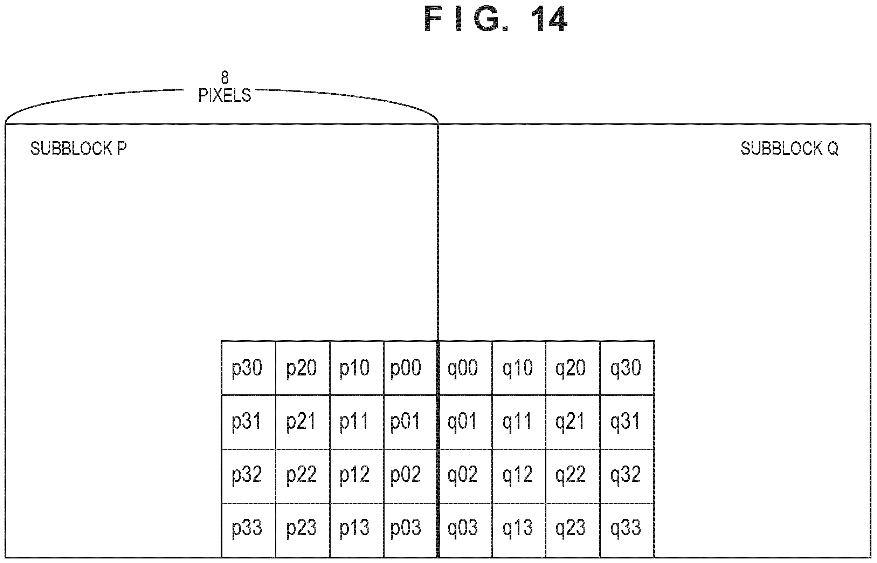

The subblock P and the subblock Q shown in Fig. 14 are subblocks that have a size of 8 pixels × 8 pixels each and are adjacent across a boundary. Each of the subblocks serves as a unit of orthogonal transformation. p00 to p33 indicate pixels (pixel values) belonging to the subblock P, and q00 to q33 indicate pixels (pixel values) belonging to the subblock Q. The pixel group of p00 to p33 and the pixel group of q00 to q33 are in contact across the boundary. If the bS value is 1 or more concerning luminance, the in-loop filter unit 1309 determines, in accordance with, for example, the following expression, whether to perform deblocking filter processing for the boundary between the subblock P and the subblock Q.

$$|p20 - 2 \times p10 + p00| + |p23 - 2 \times p13 + p03| + |q20 - 2 \times q10 + q00| + |q23 - 2 \times q13 + q03| < \beta$$

Here, $\beta$ is a value corresponding to the average value of the quantization step value in the subblock P and the quantization step value in the subblock Q and, for example, among various values $\beta$ registered in a table, $\beta$ registered in association with the average value is acquired. Only when this expression is satisfied, the in-loop filter unit 1309 determines to perform deblocking filter processing for the boundary between the subblock P and the subblock Q.

Upon determining to perform deblocking filter processing, the in-loop filter unit 1309 determines which one of a strong filter and a weak filter, which have different smoothing effects, is to be used. For example, if all the following six expressions ((1) to (6)) are satisfied, the in-loop filter unit 1309 determines to use the strong filter. On the other hand, if at least one of the following six expressions ((1) to (6)) is not satisfied, the in-loop filter unit 1309 determines to use the weak filter.

$$(1)\ 2 \times (|p20 - 2 \times p10 + p00| + |q20 - 2 \times q10 + q00|) < (\beta >> 2)$$

$$(2)\ 2 \times (|p23 - 2 \times p13 + p03| + |q23 - 2 \times q13 + q03|) < (\beta >> 2)$$

$$(3)\ |p30 - p00| + |q00 - q30| < (\beta >> 3)$$

$$(4)\ |p33 - p03| + |q03 - q33| < (\beta >> 3)$$

$$(5)\ |p00 - q00| < ((5 \times tc + 1) >> 1)$$

$$(6)\ |p03 - q03| < ((5 \times tc + 1) >> 1)$$

Here, >> N (N = 1 to 3) means an N-bit arithmetic right shift operation, and tc is a parameter that decides the maximum amount of correction of a pixel value. tc is obtained by, for example, the following processing. That is, an average value qP of the quantization step value in the subblock P, the quantization step value in the subblock Q, and the bS value is corrected in accordance with

$$qP = qP + 2 \times (bS - 1)$$

and among various tc registered in a table, tc registered in association with the corrected value qP is acquired. As is apparent from this equation, when the bS value is 2, the value qP after correction is large. The table is set such that the larger the value qP is, the larger the value tc is. For this reason, a deblocking filter that strongly corrects a pixel value if the bS value is large is applied.

Assuming that pixel values in the subblock P after deblocking filter processing are p'0k, p'1k, and p'2k, and pixel values in the subblock Q after deblocking filter processing are q'0k, q'1k, and q'2k, strong filtering (filter processing using a strong filter) concerning luminance is represented by the following expressions (k = 0 to 3).

p'0k = Clip3(p0k - 3 × tc, p0k + 3 × tc, (p2k + 2 × p1k + 2 × p0k + 2 × q0k + q1k + 4) >> 3) p'1k = Clip3(p1k - 2 × tc, p1k + 2 × tc, (p2k + p1k + p0k + q0k + 2) >> 2) p'2k = Clip3(p2k - 1 × tc, p2k + 1 × tc, (2 × p3k + 3 × p2k + p1k + p0k + q0k + 4) >> 3) q'0k = Clip3(q0k - 3 × tc, q0k + 3 × tc, (q2k + 2 × q1k + 2 × q0k + 2 × p0k + p1k + 4) >> 3) q'1k = Clip3(q1k - 2 × tc, q1k + 2 × tc, (q2k + q1k + q0k + p0k + 2) >> --> 2) q'2k = Clip3(q2k - 1 × tc, q2k + 1 × tc, (2 × q3k + 3 × q2k + q1k + q0k + p0k + 4) >> 3)

Here, Clip3(a, b, c) is a function for performing clip processing such that the range of c is given by a ≤ c ≤ b. Also, weak filtering (filter processing using a weak filter) concerning luminance is represented by the following expressions.

$$\Delta = (9 \times (q0k - p0k) - 3 \times (q1k - p1k) + 8) >> 4$$

$$|\Delta| < 10 \times \text{tc}$$

If the above conditions are not satisfied, deblocking filter processing is not executed. If the above conditions are satisfied, processing according to the following equations is performed for p0k and q0k.

$$\Delta = \text{Clip3}(-\text{tc, tc}, \Delta)$$

$$\text{p'0k} = \text{Clip1}(\text{p0k} + \Delta)$$

$$\text{q'0k} = \text{Clip1}(\text{q0k} - \Delta)$$

Here, Clip1(a) is a function for performing clip processing such that the range of a is given by $0 \le a \le$ (a maximum value that can be expressed by the bit depth of a luminance or color difference signal). For example, if the luminance is 8 bits, (a maximum value that can be expressed by the bit depth of the luminance) is 255. If the luminance is 10 bits, (a maximum value that can be expressed by the bit depth of the luminance) is 1,023.
Furthermore, if the following conditions

$$|\text{p20} - 2 \times \text{p10} + \text{p00}| + |\text{p23} - 2 \times \text{p13} + \text{p03}| < (\beta + (\beta >> 1)) >> 3)$$

$$|\text{q20} - 2 \times \text{q10} + \text{q00}| + |\text{q23} - 2 \times \text{q13} + \text{q03}| < (\beta + (\beta >> 1)) >> 3)$$

are satisfied, deblocking filter processing according to the following equations is performed for p1k and q1k.

$$\Delta\text{p} = \text{Clip3}(-(\text{tc} >> 1), \text{tc} >> 1, (((\text{p2k} + \text{p0k} + 1) >> 1 - \text{p1k} + \Delta) >> 1)$$

$$\text{p'1k} = \text{Clip1}(\text{p1k} + \Delta\text{p})$$

$$\Delta\text{q} = \text{Clip3}(-(\text{tc} >> 1), \text{tc} >> 1, (((\text{q2k} + \text{q0k} + 1) >> 1 - \text{q1k} + \Delta) >> 1)$$

$$\text{q'1k} = \text{Clip1}(\text{q1k} + \Delta\text{q})$$

As for deblocking filter processing concerning the color difference, if the filter length is 1, only when the bS value is 2, deblocking filter processing according to the following equations is performed.

$$\Delta = \text{Clip3}(-\text{tc, tc}, ((((\text{q0k} - \text{p0k}) << 2) + \text{p1k} - \text{q1k} + 4) >> 3))$$

$$\text{p'0k} = \text{Clip1}(\text{p0k} + \Delta)$$

$$\text{q'0k} = \text{Clip1}(\text{q0k} - \Delta)$$

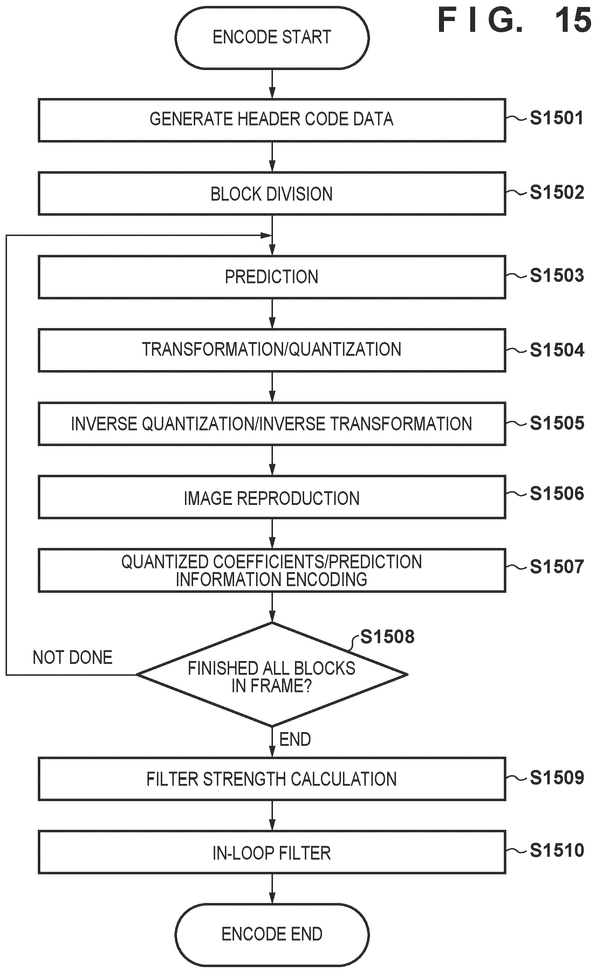

Note that in this embodiment, as for deblocking filter processing concerning the color difference, if the filter length is 1, only when the bS value is 2, deblocking filter processing is executed. However, the present invention is not limited to this. For example, if the bS value is a value other than 0, deblocking filter processing may be executed. Deblocking filter processing may be executed only when the filter length is longer than 1.
Also, in this embodiment, the bS value is used to whether to apply deblocking filter and calculate the maximum value of correction of a pixel value by the deblocking filter. In addition, a strong filter having a high smoothing effect and a weak filter having a low smoothing effect are selectively used in accordance with the conditions of pixel values. However, the present invention is not limited to this. For example, the filter length may be decided in accordance with the bS value, or only the degree of the smoothing effect may be decided by the bS value.
Encoding processing by the above-described image encoding apparatus will be described with reference to the flowchart of Fig. 15. Note that the processing according to the flowchart of Fig. 15 is encoding processing for one input image. Hence, when encoding the image of each frame of a moving image or a plurality of images captured periodically or nonperiodically, the processing according to the flowchart of Fig. 15 is repetitively performed for each image.

In step S1501, an integrated encoding unit 111 encodes various kinds of header information necessary for encoding of the input image, thereby generating header code data.

In step S1502, a division unit 102 divides the input image into a plurality of basic blocks, and outputs each divided basic block. A prediction unit 104 divides the basic block into a plurality of subblocks on a basic block basis.

In step S1503, the prediction unit 104 selects one of unselected subblocks of the input image as a selected subblock, and decides the prediction mode of the selected subblock. The prediction unit 104 performs prediction according to the decided prediction mode for the selected subblock, and acquires the prediction image, the prediction errors, and the prediction information of the selected subblock.

In step S1504, the transformation/quantization unit 105 performs, for the prediction errors of the selected subblock acquired in step S1503, orthogonal transformation processing, thereby generating orthogonal transform coefficients. The transformation/quantization unit 105 also quantizes the orthogonal transform coefficients using a quantization matrix, thereby acquiring quantized coefficients.

In step S1505, an inverse quantization/inverse transformation unit 106 performs inverse quantization for the quantized coefficients of the selected subblock acquired in step S1504 using the described above quantization matrix, thereby generating orthogonal transform coefficients. The inverse quantization/inverse transformation unit 106 then performs inverse orthogonal transformation of the generated orthogonal transform coefficients, thereby generating (reproducing) the prediction errors.

In step S1506, an image reproduction unit 107 generates, based on the prediction information acquired in step S1503, a prediction image from the image stored in the frame memory 108, and reproduces the image of the subblock by adding the prediction image and the prediction errors generated in step S1505. The image reproduction unit 107 then stores the reproduced image in the frame memory 108.

In step S1507, an encoding unit 110 performs entropy-encoding of the quantized coefficients acquired in step S1504 and the prediction information acquired in step S1503, thereby generating encoded data.

The integrated encoding unit 111 generates a bitstream by multiplexing the header code data generated in step S1501 and the encoded data generated by the encoding unit 110 in step S1507.

In step S1508, a control unit 150 determines whether all the subblocks of the input image have been selected as selected subblocks. As the result of the determination, if all the subblocks of the input image have been selected as selected subblocks, the process advances to step S1509. On the other hand, if at least one subblock that is not selected yet as a selected subblock remains among the subblocks of the input image, the process returns to step S1503.

In step S1509, the decision unit 1313 decides the bS value for each boundary between adjacent subblocks. In step S1510, the in-loop filter unit 1309 performs in-loop filter processing such as deblocking filter of filter strength based on the bS value decided in step S1509 for the image stored in the frame memory 108. More specifically, the in-loop filter unit 1309 performs, for the boundary between subblocks each serving as a unit of orthogonal transformation of the image stored in the frame memory 108, in-loop filter processing such as deblocking filter of filter strength based on the bS value decided by the decision unit 1313 for the boundary. The in-loop filter unit 109 then stores the image that has undergone the in-loop filter processing in the frame memory 108.

As described above, according to this embodiment, since a deblocking filter having a high distortion correction effect can be set for the boundary between subblocks using mixed intra-inter prediction, it is possible to suppress block distortion and improve image quality. Also, since no new operation is necessary for calculating the filter strength, the complexity of implementation is not increased.

Also, in this embodiment, the filter strength is used to whether to apply a deblocking filter and calculate the maximum value of correction of a pixel value by the deblocking filter. However, the present invention is not limited to this. For example, if the filter strength is higher, a deblocking filter having a longer tap length and a higher correction effect can be used, and if the filter strength is lower, a deblocking filter having a shorter tap length and a lower correction effect can be used.

Also, in this embodiment, only three types of predictions including intra-prediction, inter-prediction, and mixed intra-inter prediction are used. However, the present invention is not limited to this and, for example, combined intra-inter prediction (CIIP) employed in the VVC may be used. In this case, the bS value used for a subblock using mixed intra-inter prediction can be the same as the bS value in a case where combined intra-inter prediction is used. This makes it possible to encode a bitstream in which a deblocking filter of the same strength is applied to a subblock for which prediction with a common feature that both intra-prediction pixels and inter-prediction pixels are used in the same subblock is used.

[Fourth Embodiment]

An image decoding apparatus according to this embodiment is an image decoding apparatus that decodes an encoded image on a block basis. This image decoding apparatus performs prediction processing for each block, thereby decoding an image. Also, the image decoding apparatus decides the strength of deblocking filter processing to be performed for the boundary between a first block and a second block adjacent to the first block, and performs deblocking filter processing according to the decided strength for the boundary. As the prediction processing, the image decoding apparatus uses one of a first prediction mode (intra-prediction) in which prediction pixels of a decoding target block are derived using pixels in an image including the decoding target block, a second prediction mode (inter-prediction) in which the prediction pixels of the decoding target block are derived using pixels in another image different from the image including the decoding target block, and a third prediction mode (mixed intra-inter prediction) in which for a partial region of the decoding target block, prediction pixels are derived using pixels in the image including the decoding target block, and for another region different from the partial region of the decoding target block, prediction pixels are derived using pixels in another image different from the image including the decoding target block. Here, when deciding the strength of the deblocking filter processing, if at least one of the first block and the second block is a block to which the first prediction mode is applied, the strength is decided as first strength. Also, if at least one of the first block and the second block is a block to which the third prediction mode is applied, the strength is decided as strength based on the first strength.

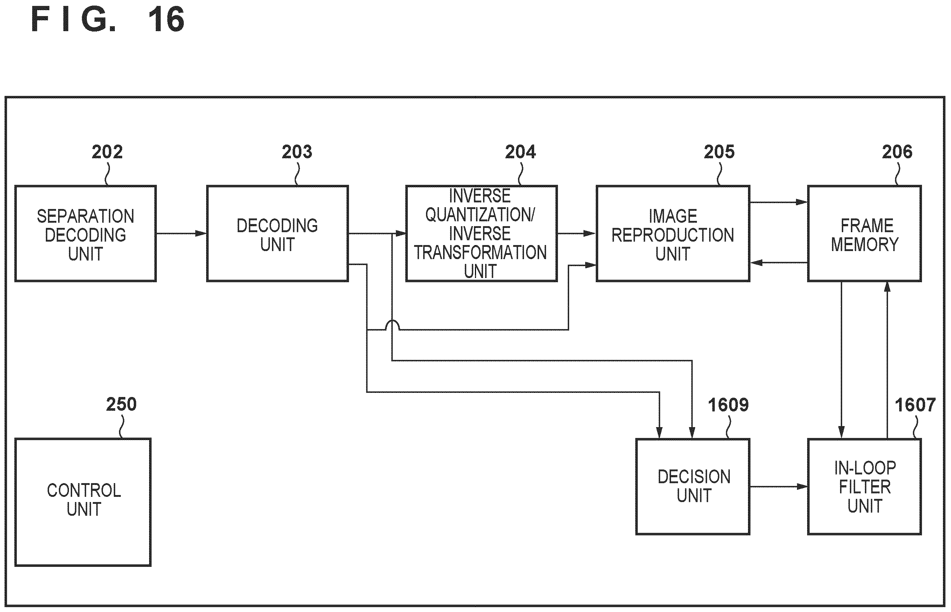

In this embodiment, an image decoding apparatus that decodes a bitstream encoded by the image encoding apparatus according to the third embodiment will be described. An example of the functional configuration of the image decoding apparatus according to this embodiment will be described first with reference to the block diagram of Fig. 16. The same reference numerals as in Fig. 2 denote the same function units in Fig. 16, and a description thereof will be omitted.

An in-loop filter unit 1607 performs, for a subblock boundary of a reproduced image stored in a frame memory 206, in-loop filter processing such as deblocking filter of filter strength according to a bS value decided by a decision unit 1609 for the subblock boundary. Like the decision unit 1313, the decision unit 1609 decides the filter strength (bS value) of deblocking filter processing to be performed for the boundary between two adjacent subblocks.

In this embodiment, as in the third embodiment, the bS value is used to whether to apply a deblocking filter and calculate the maximum value of correction of a pixel value by the deblocking filter. In addition, a strong filter having a high smoothing effect and a weak filter having a low smoothing effect are selectively used in accordance with the conditions of pixel values. However, the present invention is not limited to this. For example, the filter length may be decided in accordance with the bS value, or only the degree of the smoothing effect may be decided by the bS value.

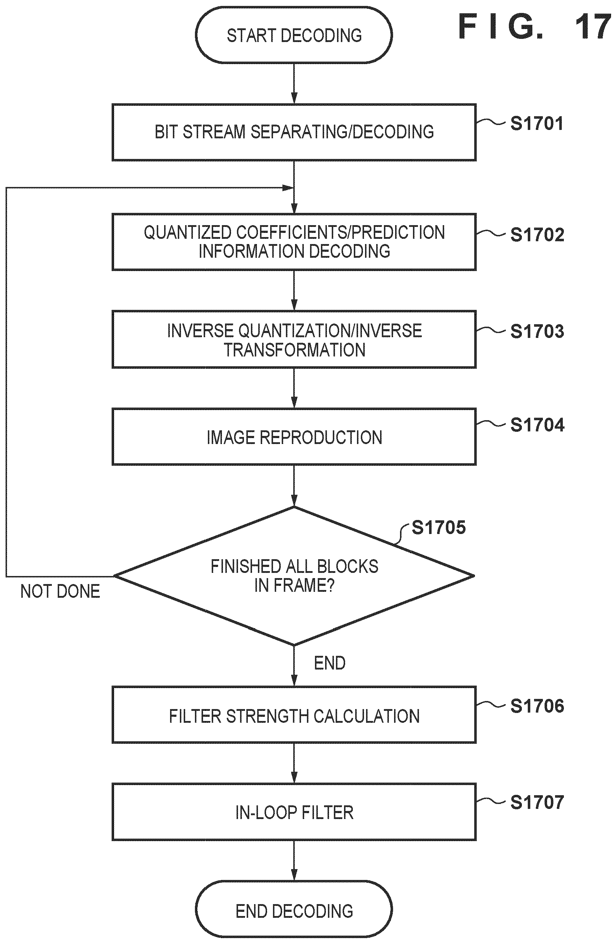

Decoding processing by the image decoding apparatus according to this embodiment will be described with reference to the flowchart of Fig. 17. In step S1701, a separation decoding unit 202 acquires a bitstream. The separation decoding unit 202 then separates the encoded data of an input image from the bitstream, supplies the encoded data to a decoding unit 203, and decodes header code data in the bitstream.

In step S1702, the decoding unit 203 decodes the encoded data supplied from the separation decoding unit 202, thereby reproducing the quantized coefficients of the decoding target subblock and prediction information.

In step S1703, an inverse quantization/inverse transformation unit 204 inversely quantizes the quantized coefficients of the decoding target subblock using a quantization matrix, thereby reproducing orthogonal transform coefficients. The inverse quantization/inverse transformation unit 204 reproduces the prediction errors of the decoding target subblock by performing inverse orthogonal transformation for the reproduced orthogonal transform coefficients, and supplies the reproduced prediction error to an image reproduction unit 205.

In step S 1704, the image reproduction unit 205 refers to an image stored in the frame memory 206 based on the prediction information decoded by the decoding unit 203, thereby generating the prediction image of the decoding target subblock. The image reproduction unit 205 then generates the reproduced image of the decoding target subblock by adding the prediction error obtained by the inverse quantization/inverse transformation unit 204 to the generated prediction image, and stores the generated reproduced image in the frame memory 206.

In step S1705, a control unit 250 determines whether the processes of steps S1702 to S 1704 have been performed for all subblocks. As the result of the determination, if the processes of steps S 1702 to S 174 have been performed for all subblocks, the process advances to step S 1706. On the other hand, if a subblock for which the processes of steps S 1702 to S 1704 are not performed still remains, the process returns to step S 1702 to perform the processes of steps S1702 to S 1704 for the subblock.

In step S 1706, like the decision unit 1313 described in the third embodiment, the decision unit 1609 decides the filter strength of deblocking filter processing to be performed for the boundary between two adjacent subblocks. Since the type of prediction (intra-prediction, inter-prediction, or mixed intra-inter prediction) applied to each subblock is recorded in the prediction information, prediction applied to each subblock can be specified by referring to the prediction information.

In step S1707, the in-loop filter unit 1607 performs, for the subblock boundary of the reproduced image stored in the frame memory 206, in-loop filter processing such as deblocking filter of filter strength according to the bS value decided by the decision unit 1609 for the subblock boundary.

As described above, according to this embodiment, an appropriate deblocking filter can be applied when decoding a bitstream including "a subblock encoded by mixed intra-inter prediction", which is generated by the image encoding apparatus according to the third embodiment.

[Fifth Embodiment]

The function units shown in Figs. 1, 2, 13, and 16 may be implemented by hardware, or the function units except the holding unit 103 and the frame memories 108 and 206 may be implemented by software (computer program).

In the former case, the hardware may be a circuit incorporated in an apparatus that performs encoding or decoding of an image, such as an image capturing apparatus, or may be a circuit incorporated in an apparatus that performs encoding or decoding of an image supplied from an external apparatus such as an image capturing apparatus or a server apparatus.

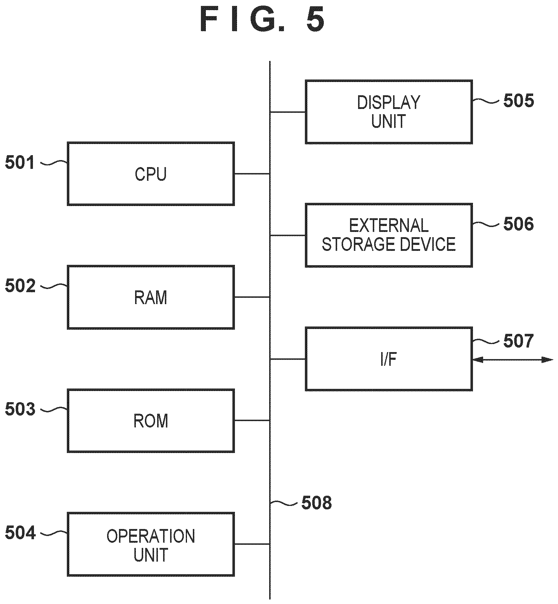

In the latter case, the computer program may be stored in the memory of an apparatus that performs encoding or decoding of an image, such as an image capturing apparatus, a memory accessible from an apparatus that performs encoding or decoding of an image supplied from an external apparatus such as an image capturing apparatus or a server apparatus, or the like. An apparatus (computer apparatus) capable of reading out the computer program from the memory and executing it can be applied to the above-described image encoding apparatus or the above-described image decoding apparatus. An example of the hardware configuration of the computer apparatus will be described with reference to the block diagram of Fig. 5.

A CPU 501 executes various kinds of processing using computer programs and data stored in a RAM 502 or a ROM 503. Thus, the CPU 501 controls the operation of the entire computer apparatus, and executes or controls various kinds of processing described as processing executed by the image encoding apparatus or the image decoding apparatus in the above-described embodiments and modifications.

The RAM 502 has an area configured to store computer programs and data loaded from an external storage device 506, and an area configured to store data acquired from the outside via an I/F (interface) 507. The RAM 502 further has a work area (a frame memory or the like) used by the CPU 501 when executing various kinds of processing. The RAM 502 can thus appropriately provide various kinds of areas.

The ROM 503 stores setting data of the computer apparatus, computer programs and data associated with activation of the computer apparatus, computer programs and data associated with the basic operation of the computer apparatus, and the like.

An operation unit 504 is a user interface such as a keyboard, a mouse, or a touch panel, and a user can input various kinds of instructions to the CPU 501 by operating the operation unit 504.

A display unit 505 includes a liquid crystal screen or a touch panel screen, and displays a processing result by the CPU 501 as an image, characters, or the like. Note that the display unit 505 may be a projection device such as a projector that projects an image or characters.

The external storage device 506 is a mass information storage device such as a hard disk drive device. In the external storage device 506, an OS (Operating System), computer programs and data used to cause the CPU 501 to execute the above-described various kinds of processing described as processing performed by the image encoding apparatus or the image decoding apparatus, and the like are stored. Information (the encoding table, the table, and the like) handled as known information in the above description is also stored in the external storage device 506. Encoding target data (such as an input image or a two-dimensional data array) may be stored in the external storage device 506.

The computer programs and data stored in the external storage device 506 are appropriately loaded into the RAM 502 in accordance with the control of the CPU 501 and processed by the CPU 501. Note that the above-described holding unit 103 and the frame memories 108 and 206 can be implemented using the RAM 502, the ROM 503, the external storage device 506, or the like.

A network such as a LAN or the Internet, or another device such as a projection device or a display device can be connected to an I/F 507, and the computer apparatus can acquire or send various kinds of information via the I/F 507.

All the CPU 501, the RAM 502, the ROM 503, the operation unit 504, the display unit 505, the external storage device 506, and the I/F 507 are connected to a system bus 508.

In the above-described configuration, when the computer apparatus is powered on, the CPU 501 executes a boot program stored in the ROM 503, loads the OS stored in the external storage device 506 into the RAM 502, and activates the OS. As a result, the computer apparatus can perform communication via the I/F 507. Under the control of the OS, the CPU 501 loads an application associated with encoding from the external storage device 506 into the RAM 502 and executes it, thereby functioning as the function units (except the holding unit 103 and the frame memory 108) shown in Fig. 1 or 13. That is, the computer apparatus functions as the above-described image encoding apparatus. On the other hand, under the control of the OS, the CPU 501 loads an application associated with decoding from the external storage device 506 into the RAM 502 and executes it, thereby functioning as the function units (except the frame memory 206) shown in Fig. 2 or 16. That is, the computer apparatus functions as the above-described image decoding apparatus.

Note that in this embodiment, description in which the computer apparatus having the configuration shown in Fig. 5 can be applied to the image encoding apparatus or the image decoding apparatus is made. However, the hardware configuration of the computer apparatus applicable to the image encoding apparatus or the image decoding apparatus is not limited to the hardware configuration shown in Fig. 5. Also, the hardware configuration of the computer apparatus applied to the image encoding apparatus and the hardware configuration of the computer apparatus applied to the image decoding apparatus may be identical or different.

The numerical values, processing timings, processing orders, the main constituent of processing, the transmission destinations/transmission sources/storage locations of data (information), and the like used in the above-described embodiments and modifications are merely examples used to make a detailed description, and it is not intended to limit to these examples.

Some or all of the above-described embodiments or modifications may appropriately be combined and used. Also, some or all of the above-described embodiments or modifications may selectively be used.

(Other Embodiments)

The present invention can be implemented by processing of supplying a program for implementing one or more functions of the above-described embodiments to a system or apparatus via a network or storage medium, and causing one or more processors in the computer of the system or apparatus to read out and execute the program. The present invention can also be implemented by a circuit (for example, an ASIC) for implementing one or more functions.

The present invention is not limited to the above embodiments and various changes and modifications can be made within the spirit and scope of the present invention. Therefore, to apprise the public of the scope of the present invention, the following claims are made.

This application claims priority from Japanese Patent Application No. 2022-046035 filed March 22, 2022, which is hereby incorporated by reference herein.

**Claims**

1.    An image encoding apparatus **characterized by** comprising:

   encoding means for encoding an image by performing prediction processing on a block basis;
   decision means for deciding strength of deblocking filter processing to be performed for a boundary between a first block in the image and a second block adjacent to the first block in the image; and
   processing means for performing deblocking filter processing according to the strength decided by the decision means for the boundary,
   wherein the encoding means uses, as the prediction processing, one of
   a first prediction mode in which prediction pixels of an encoding target block are derived using pixels in an image including the encoding target block,
   a second prediction mode in which the prediction pixels of the encoding target block are derived using pixels in another image different from the image including the encoding target block, and
   a third prediction mode in which for a partial region of the encoding target block, prediction pixels are derived using pixels in the image including the encoding target block, and for another region different from the partial region of the encoding target block, prediction pixels are derived using pixels in another image different from the image including the encoding target block, and
   if at least one of the first block and the second block is a block to which the first prediction mode is applied, the decision means decides the strength as first strength, and
   if at least one of the first block and the second block is a block to which the third prediction mode is applied, the decision means decides the strength as strength based on the first strength.

2.    The image encoding apparatus according to claim 1, **characterized in that**
   if at least one of the first block and the second block is the block to which the third prediction mode is applied, the decision means decides the strength as the first strength.

3.    The image encoding apparatus according to claim 1, **characterized in that**
   if at least one of the first block and the second block is the block to which the third prediction mode is applied, the decision means decides the strength as an intermediate strength between the first strength and another strength.

4.    The image encoding apparatus according to claim 1, **characterized in that**
   if at least one of the first block and the second block is the block to which the third prediction mode is applied, the decision means decides the strength for a prediction pixel obtained by intra-prediction at the boundary as the first strength, and decides the strength for a prediction pixel obtained by inter-prediction at the boundary as a second strength.

5. The image encoding apparatus according to any one of claims 1 to 4, **characterized in that** the decision means decides strength for a luminance component and strength for a color difference component.

6. The image encoding apparatus according to any one of claims 1 to 5, **characterized in that** the strength is a bS value.

7. The image encoding apparatus according to any one of claims 1 to 5, **characterized in that**

if at least one of the first block and the second block is the block to which the first prediction mode is applied, the decision means decides a coefficient of a deblocking filter having correction strength of the first strength, and
if at least one of the first block and the second block is the block to which the third prediction mode is applied, the decision means decides the coefficient of the deblocking filter having the correction strength of the first strength.

8. The image encoding apparatus according to any one of claims 1 to 5, **characterized in that**

if at least one of the first block and the second block is the block to which the first prediction mode is applied, the decision means decides a filter length of a deblocking filter having correction strength of the first strength, and
if at least one of the first block and the second block is the block to which the third prediction mode is applied, the decision means decides the filter length of the deblocking filter having the correction strength of the first strength.

9. An image decoding apparatus for decoding an encoded image on a block basis, **characterized by** comprising:

decoding means for decoding the image by performing prediction processing on the block basis;
decision means for deciding strength of deblocking filter processing to be performed for a boundary between a first block and a second block adjacent to the first block; and
processing means for performing deblocking filter processing according to the strength decided by the decision means for the boundary,
wherein the decoding means uses, as the prediction processing, one of
a first prediction mode in which prediction pixels of a decoding target block are derived using pixels in an image including the decoding target block,
a second prediction mode in which the prediction pixels of the decoding target block are derived using pixels in another image different from the image including the decoding target block, and
a third prediction mode in which for a partial region of the decoding target block, prediction pixels are derived using pixels in the image including the decoding target block, and for another region different from the partial region of the decoding target block, prediction pixels are derived using pixels in another image different from the image including the decoding target block, and
if at least one of the first block and the second block is a block to which the first prediction mode is applied, the decision means decides the strength as first strength, and
if at least one of the first block and the second block is a block to which the third prediction mode is applied, the decision means decides the strength as strength based on the first strength.

10. An image encoding method **characterized by** comprising:

an encoding step of encoding an image by performing prediction processing on a block basis;
a decision step of deciding strength of deblocking filter processing to be performed for a boundary between a first block in the image and a second block adjacent to the first block in the image; and
a processing step of performing deblocking filter processing according to the strength decided in the decision step for the boundary,
wherein in the encoding step, one of
a first prediction mode in which prediction pixels of an encoding target block are derived using pixels in an image including the encoding target block,
a second prediction mode in which the prediction pixels of the encoding target block are derived using pixels in another image different from the image including the encoding target block, and
a third prediction mode in which for a partial region of the encoding target block, prediction pixels are derived using pixels in the image including the encoding target block, and for another region different from the partial region of the encoding target block, prediction pixels are derived using pixels in another image different from the image including the encoding target block
is used as the prediction processing, and
in the decision step,

if at least one of the first block and the second block is a block to which the first prediction mode is applied, the strength is decided as first strength, and

if at least one of the first block and the second block is a block to which the third prediction mode is applied, the strength is decided as strength based on the first intensity.

11. An image decoding method of decoding an encoded image on a block basis, **characterized by** comprising:

a decoding step of decoding the image by performing prediction processing on the block basis;

a decision step of deciding strength of deblocking filter processing to be performed for a boundary between a first block and a second block adjacent to the first block; and

a processing step of performing deblocking filter processing according to the strength decided in the decision step for the boundary,

wherein in the decoding step, one of

a first prediction mode in which prediction pixels of a decoding target block are derived using pixels in an image including the decoding target block,

a second prediction mode in which the prediction pixels of the decoding target block are derived using pixels in another image different from the image including the decoding target block, and

a third prediction mode in which for a partial region of the decoding target block, prediction pixels are derived using pixels in the image including the decoding target block, and for another region different from the partial region of the decoding target block, prediction pixels are derived using pixels in another image different from the image including the decoding target block

is used as the prediction processing, and

in the decision step,

if at least one of the first block and the second block is a block to which the first prediction mode is applied, the strength is decided as first strength, and

if at least one of the first block and the second block is a block to which the third prediction mode is applied, the strength is decided as strength based on the first strength.

12. A computer program configured to cause a computer to function as each means of an image encoding apparatus defined in any one of claims 1 to 8.

13. A computer program configured to cause a computer to function as each means of an image decoding apparatus defined in claim 9.

# FIG. 1

EP 4 498 673 A1

# F I G. 2

EP 4 498 673 A1

**F I G. 3**

```
        ┌─────────────────────────────┐
        │        ENCODE START         │
        └─────────────────────────────┘
                      │
        ┌─────────────────────────────┐
        │ QUANTIZATION MATRIX ENCODING │───S302
        └─────────────────────────────┘
                      │
        ┌─────────────────────────────┐
        │   GENERATE HEADER CODE DATA  │───S303
        └─────────────────────────────┘
                      │
        ┌─────────────────────────────┐
        │       BLOCK DIVISION         │───S304
        └─────────────────────────────┘
                      │
        ┌─────────────────────────────┐
        │         PREDICTION           │───S305
        └─────────────────────────────┘
                      │
        ┌─────────────────────────────┐
        │  TRANSFORMATION/QUANTIZATION │───S306
        └─────────────────────────────┘
                      │
        ┌──────────────────────────────────────────┐
        │ INVERSE QUANTIZATION/INVERSE TRANSFORMATION│───S307
        └──────────────────────────────────────────┘
                      │
        ┌─────────────────────────────┐
        │      IMAGE REPRODUCTION      │───S308
        └─────────────────────────────┘
                      │
        ┌─────────────────────────────┐
        │ QUANTIZED COEFFICIENTS/      │───S309
        │  PREDICTION INFORMATION ENCODING │
        └─────────────────────────────┘
                      │
                  ╱───────╲   S310
       NOT DONE  ╱ FINISHED ╲
        ◄───────╱ ALL BLOCKS  ╲
                ╲  IN FRAME?   ╱
                 ╲───────────╱
                      │ END
        ┌─────────────────────────────┐
        │        IN-LOOP FILTER        │───S311
        └─────────────────────────────┘
                      │
        ┌─────────────────────────────┐
        │         ENCODE END           │
        └─────────────────────────────┘
```

# F I G. 4

```
        ┌─────────────────────────┐
        │    START DECODING       │
        └─────────────────────────┘
                    │
                    ▼
    ┌─────────────────────────────────┐   ～S401
    │     BITSTREEM SEPARATION        │
    └─────────────────────────────────┘
                    │
                    ▼
    ┌─────────────────────────────────┐   ～S402
    │  QUANTIZATION MATRIX DECODING   │
    └─────────────────────────────────┘
                    │
                    ▼
    ┌─────────────────────────────────┐   ～S403
    │  QUANTIZED COEFFICIENTS/PREDICTION │
    │     INFORMATION DECODING        │
    └─────────────────────────────────┘
                    │
                    ▼
    ┌─────────────────────────────────┐   ～S404
    │ INVERSE QUANTIZATION/INVERSE TRANSFORMATION │
    └─────────────────────────────────┘
                    │
                    ▼
    ┌─────────────────────────────────┐   ～S405
    │       IMAGE REPRODUCTION        │
    └─────────────────────────────────┘
                    │
                    ▼                        ～S406
NOT DONE  ◇ FINISHED ALL BLOCKS IN FRAME? ◇
                    │ END
                    ▼
    ┌─────────────────────────────────┐   ～S407
    │        IN-LOOP FILTER           │
    └─────────────────────────────────┘
                    │
                    ▼
        ┌─────────────────────────┐
        │     END DECODING        │
        └─────────────────────────┘
```

# F I G. 5

501 — CPU

502 — RAM

503 — ROM

504 — OPERATION UNIT

505 — DISPLAY UNIT

506 — EXTERNAL STORAGE DEVICE

507 — I/F

508

# F I G. 6A

| SEQUENCE HEADER | PICTURE HEADER | PICTURE DATA | PICTURE HEADER | PICTURE DATA |

ELEMENT ENCODING RESULT

QUANTIZATION MATRIX
ENCODED DATA

# F I G. 6B

| SEQUENCE HEADER | PICTURE HEADER | PICTURE DATA | PICTURE HEADER | PICTURE DATA |

QUANTIZATION
MATRIX
ENCODING METHOD
INFORMATION CODE

ELEMENT ENCODING RESULT

QUANTIZATION MATRIX
ENCODED DATA

FIG. 7A

700

FIG. 7B

700

FIG. 7C

700

FIG. 7D

700

FIG. 7E

700

FIG. 7F

700

**F I G. 8A**

| 6 | 10 | 13 | 16 | 18 | 23 | 25 | 27 |
|----|----|----|----|----|----|----|----|
| 10 | 11 | 16 | 18 | 23 | 25 | 27 | 29 |
| 13 | 16 | 18 | 23 | 25 | 27 | 29 | 31 |
| 16 | 18 | 23 | 25 | 27 | 29 | 31 | 33 |
| 18 | 23 | 25 | 27 | 29 | 31 | 33 | 36 |
| 23 | 25 | 27 | 29 | 31 | 33 | 36 | 38 |
| 25 | 27 | 29 | 31 | 33 | 36 | 38 | 40 |
| 27 | 29 | 31 | 33 | 36 | 38 | 40 | 42 |

~800

**F I G. 8B**

| 9 | 13 | 15 | 17 | 19 | 21 | 22 | 24 |
|----|----|----|----|----|----|----|----|
| 13 | 13 | 17 | 19 | 21 | 22 | 24 | 25 |
| 15 | 17 | 19 | 21 | 22 | 24 | 25 | 27 |
| 17 | 19 | 21 | 22 | 24 | 25 | 27 | 28 |
| 19 | 21 | 22 | 24 | 25 | 27 | 28 | 30 |
| 21 | 22 | 24 | 25 | 27 | 28 | 30 | 32 |
| 22 | 24 | 25 | 27 | 28 | 30 | 32 | 33 |
| 24 | 25 | 27 | 28 | 30 | 32 | 33 | 35 |

~800

**F I G. 8C**

| 8 | 11 | 14 | 17 | 19 | 22 | 24 | 26 |
|----|----|----|----|----|----|----|----|
| 11 | 12 | 17 | 19 | 22 | 24 | 26 | 27 |
| 14 | 17 | 19 | 22 | 24 | 26 | 27 | 29 |
| 17 | 19 | 22 | 24 | 26 | 27 | 29 | 31 |
| 19 | 22 | 24 | 26 | 27 | 29 | 31 | 33 |
| 22 | 24 | 26 | 27 | 29 | 31 | 33 | 35 |
| 24 | 26 | 27 | 29 | 31 | 33 | 35 | 37 |
| 26 | 27 | 29 | 31 | 33 | 35 | 37 | 39 |

~800

# F I G. 9

# F I G. 10A

1000

| -2 | 4 | 0 | 3 | -2 | 2 | 3 | 0 | 0 | 0 | 2 | 0 | 0 | 0 | 0 | ... |

# F I G. 10B

1000

| 1 | 4 | 0 | 2 | -2 | 2 | 2 | 0 | 0 | 0 | 2 | 0 | 0 | 0 | 0 | ... |

# F I G. 10C

1000

| 0 | 3 | 0 | 3 | -2 | 2 | 3 | 0 | 0 | 0 | 2 | 0 | 0 | 0 | 0 | ... |

# F I G. 11A

| ENCODING TARGET VALUE | BINARY CODE |
|---|---|
| ... | ... |
| -5 | 0001011 |
| -4 | 0001001 |
| -3 | 00111 |
| -2 | 00101 |
| -1 | 011 |
| 0 | 1 |
| 1 | 010 |
| 2 | 00100 |
| 3 | 000110 |
| 4 | 0001000 |
| 5 | 0001010 |
| ... | ... |

# F I G. 11B

| ENCODING TARGET VALUE | BINARY CODE |
|---|---|
| ... | ... |
| -5 | 0001011 |
| -4 | 0001001 |
| -3 | 00111 |
| -2 | 0010 |
| -1 | 011 |
| 0 | 11 |
| 1 | 10 |
| 2 | 010 |
| 3 | 00110 |
| 4 | 0001000 |
| 5 | 0001010 |
| ... | ... |

F I G. 12A

1200a 1200

1200b

F I G. 12B

1201a 1201

1201b

F I G. 12C

1202a 1202

1202b

F I G. 12D

1203

FIG. 12E

1200c    1200

1200d

FIG. 12F

1201c    1201

1201d

FIG. 12G

1202c    1202

1202d

FIG. 12H

1203

# F I G. 13

# F I G. 14

EP 4 498 673 A1

8
PIXELS

SUBBLOCK P

SUBBLOCK Q

| p30 | p20 | p10 | p00 | q00 | q10 | q20 | q30 |
|-----|-----|-----|-----|-----|-----|-----|-----|
| p31 | p21 | p11 | p01 | q01 | q11 | q21 | q31 |
| p32 | p22 | p12 | p02 | q02 | q12 | q22 | q32 |
| p33 | p23 | p13 | p03 | q03 | q13 | q23 | q33 |

# F I G. 15

```
        ENCODE START

    GENERATE HEADER CODE DATA          S1501

        BLOCK DIVISION                 S1502

        PREDICTION                     S1503

   TRANSFORMATION/QUANTIZATION         S1504

INVERSE QUANTIZATION/INVERSE TRANSFORMATION   S1505

      IMAGE REPRODUCTION               S1506

QUANTIZED COEFFICIENTS/PREDICTION
   INFORMATION ENCODING                S1507
```

S1508

NOT DONE — FINISHED ALL BLOCKS IN FRAME?

END

```
  FILTER STRENGTH CALCULATION          S1509

        IN-LOOP FILTER                 S1510

        ENCODE END
```

# FIG. 16

202 SEPARATION DECODING UNIT

203 DECODING UNIT

204 INVERSE QUANTIZATION/ INVERSE TRANSFORMATION UNIT

205 IMAGE REPRODUCTION UNIT

206 FRAME MEMORY

250 CONTROL UNIT

1609 DECISION UNIT

1607 IN-LOOP FILTER UNIT

EP 4 498 673 A1

F I G. 17

```
        ┌─────────────────────────┐
        │     START DECODING      │
        └─────────────────────────┘
                     │
                     ▼
        ┌─────────────────────────────────┐
        │ BIT STREAM SEPARATING/DECODING  │──~S1701
        └─────────────────────────────────┘
                     │
                     ▼
        ┌─────────────────────────────────┐
        │ QUANTIZED COEFFICIENTS/PREDICTION│──~S1702
        │     INFORMATION DECODING         │
        └─────────────────────────────────┘
                     │
                     ▼
        ┌─────────────────────────────────┐
        │  INVERSE QUANTIZATION/INVERSE    │──~S1703
        │        TRANSFORMATION            │
        └─────────────────────────────────┘
                     │
                     ▼
        ┌─────────────────────────────────┐
        │       IMAGE REPRODUCTION         │──~S1704
        └─────────────────────────────────┘
                     │
                     ▼
                  ╱─────╲   ~S1705
              ╱─────────────╲
   NOT DONE ╱ FINISHED ALL BLOCKS ╲
◄──────────┤    IN FRAME?          │
           ╲                      ╱
              ╲─────────────╱
                  ╲─────╱
                     │ END
                     ▼
        ┌─────────────────────────────────┐
        │   FILTER STRENGTH CALCULATION    │──~S1706
        └─────────────────────────────────┘
                     │
                     ▼
        ┌─────────────────────────────────┐
        │         IN-LOOP FILTER           │──~S1707
        └─────────────────────────────────┘
                     │
                     ▼
        ┌─────────────────────────┐
        │      END DECODING       │
        └─────────────────────────┘
```

## INTERNATIONAL SEARCH REPORT

| International application No. |
| --- |
| **PCT/JP2023/001333** |

### A. CLASSIFICATION OF SUBJECT MATTER

*H04N 19/117*(2014.01)i; *H04N 19/136*(2014.01)i; *H04N 19/159*(2014.01)i; *H04N 19/86*(2014.01)i
FI:   H04N19/117; H04N19/136; H04N19/159; H04N19/86

According to International Patent Classification (IPC) or to both national classification and IPC

### B. FIELDS SEARCHED

Minimum documentation searched (classification system followed by classification symbols)

H04N19/117; H04N19/136; H04N19/159; H04N19/86

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2020-98985 A (CANON KABUSHIKI KAISHA) 25 June 2020 (2020-06-25) paragraphs [0018], [0019], [0090] | 1-3, 5-13 |
| A | entire text, all drawings | 4 |
| Y | KIDANI, Yoshitaka et al. EE2-related: Combination of JVET-X0078 (Test 7/8), JVET-X0147 (Proposal-2), and GPM Direct Motion Storage. JVET-X0166 (version 3), ITU, 2021.10.11, pp. 1-5, [online], [retrieved on 23 March 2023], Retrieved from the Internet: <URL: https://jvet-experts.org/doc_end_user/documents/24_Teleconference/wg11/JVET-X0166-v3.zip>, JVET-X0166-v3_clean.docx        fig. 1 (b) | 1-3, 5-13 |
| A | entire text, all drawings | 4 |
| Y | JP 2018-29311 A (OKI ELECTRIC INDUSTRY CO., LTD.) 22 February 2018 (2018-02-22) paragraphs [0066]-[0068], [0091] | 7, 12 |
| A | JP 2022-513433 A (INTERDIGITAL VC HOLDINGS INC.) 08 February 2022 (2022-02-08) entire text, all drawings | 1-13 |

☐ Further documents are listed in the continuation of Box C.          ☑ See patent family annex.

| | |
| --- | --- |
| * Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
| --- | --- |
| **23 March 2023** | **04 April 2023** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

International application No.

**PCT/JP2023/001333**

| Patent document cited in search report | | | Publication date (day/month/year) | Patent family member(s) | | | Publication date (day/month/year) |
|---|---|---|---|---|---|---|---|
| JP | 2020-98985 | A | 25 June 2020 | US | 2021/0306629 | A1 | |
| | | | | paragraphs [0029]-[0037], [0107] | | | |
| | | | | WO | 2020/129463 | A1 | |
| | | | | EP | 3902252 | A1 | |
| | | | | CN | 113243107 | A | |
| | | | | KR | 10-2021-0099125 | A | |
| | | | | TW | 202038612 | A | |
| | | | | BR | 112021011632 | A2 | |
| | | | | RU | 2763292 | C1 | |
| | | | | TW | 202218423 | A | |
| JP | 2018-29311 | A | 22 February 2018 | US | 2018/0054632 | A1 | |
| | | | | paragraphs [0072]-[0074], [0097] | | | |
| JP | 2022-513433 | A | 08 February 2022 | US | 2022/0060701 | A1 | |
| | | | | entire text, all drawings | | | |
| | | | | WO | 2020/123442 | A1 | |
| | | | | CN | 113170125 | A | |
| | | | | KR | 10-2021-0099008 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013038758 A
- JP 2014507863 A

- JP 2022046035 A